Europäisches Patentamt

European Patent Office

Office européen des brevets

(19)

(11) **EP 0 582 111 B1**

(12) **EUROPÄISCHE PATENTSCHRIFT**

(45) Veröffentlichungstag und Bekanntmachung des Hinweises auf die Patenterteilung:
**01.10.1997 Patentblatt 1997/40**

(51) Int Cl.6: **G01D 5/20**, G01D 5/244, G01D 5/22

(21) Anmeldenummer: **93111319.5**

(22) Anmeldetag: **14.07.1993**

(54) **Induktiver Stellungsgeber**

Inductive position sensor

Capteur inductif de position

(84) Benannte Vertragsstaaten:
**AT CH DE ES FR GB IT LI NL SE**

(30) Priorität: **22.07.1992 DE 4224225**

(43) Veröffentlichungstag der Anmeldung:
**09.02.1994 Patentblatt 1994/06**

(73) Patentinhaber:
- **Mehnert, Walter, Dr.**
  **D-85521 Ottobrunn (DE)**
- **Theil, Thomas**
  **D-82340 Feldafing. (DE)**

(72) Erfinder:
- **Mehnert, Walter, Dr.**
  **D-85521 Ottobrunn (DE)**
- **Theil, Thomas**
  **D-82340 Feldafing. (DE)**

(74) Vertreter: **Strasser, Wolfgang, Dipl.-Phys**
**Patentanwälte**
**Strohschänk, Uri, Strasser & Englaender**
**Innere Wiener Strasse 8**
**81667 München (DE)**

(56) Entgegenhaltungen:
EP-A- 0 337 939    EP-A- 0 367 927
DE-A- 3 231 990    US-A- 3 949 339

**Beschreibung**

Die Erfindung betrifft einen induktiven Stellungsgeber gemäß dem Oberbegriff von Anspruch 1.

Solche Stellungsgeben umfassen nach dem Stand der Technik wie er der EP-A-0 528 199 [Art.54, (3,4) EPü] entnehmbar ist, Meßspulenanordnungen, an denen ständig wenigstens zwei Meßspulensignale a, b abgreifbar sind, die, wenn der induktive Stellungsgeber seinen Meßbereich durchläuft, voneinander verschiedene Amplitudenverläufe zeigen. Es wird davon ausgegangen, daß sowohl multiplikative als auch additive Störgrössen in diese beiden Wechselspannungssignale a, b in entsprechender Weise eingehen, die in ihrem Einfluß auf das Meßergebnis dadurch reduziert werden sollen, daß man als Meßsignal einen Quotienten m=(a-b)/(a+b) verwendet, der mit Hilfe einer Rechenschaltung in einer unten noch genauer erläuterten Weise gebildet wird.

Eine vollständige Eliminierung der additiven Störgrößen aus m ist nur dann möglich, wenn, wie in der EP-A-0 528 199 [Art.54, (3,4) EPü] beschrieben, von der Meßspulenanordnung Signale geliefert werden, aus denen durch Differenzbildung additive Störungen eliminiert worden sind. Ist dies der Fall, so wird günstigerweise einer der Quotienten

$$m = \Delta a/(\Delta a + \Delta b) \qquad (1)$$

oder

$$m' = (\Delta a - \Delta b)/(\Delta a + \Delta b) \qquad (2)$$

als Meßsignal verwendet, aus dem durch die Quotientenbildung auch die multiplikativen Störungen völlig beseitigt sind.

Eine Rechenschaltung zur Bildung der Quotienten m bzw m' kann so aufgebaut sein, daß jedem von zwei Eingängen, denen die Signale $\Delta a$ bzw. $\Delta b$ ständig zugeführt werden, ein Eingangsverstärker nachgeschaltet ist, dessen Ausgang mit dem einen bzw. dem anderen Ende einer Widerstandskette verbunden ist, die aus exakt gleich großen Widerständen besteht. Jeder der beiden Endpunkte der Widerstandskette sowie jeder Verbindungspunkt zwischen zwei aufeinanderfolgenden Widerständen ist über einen eigenen steuerbaren Schalter mit einem gemeinsamen Ausgangsanschluß verbindbar. Von diesen steuerbaren Schaltern ist immer nur einer geschlossen, während alle anderen geöffnet sind. Welcher Schalter geschlossen ist und welche geöffnet sind, wird durch ein von einem Zähler erzeugtes Digitalwort festgelegt, das zur Ansteuerung der steuerbaren Schalter dient.

Der Zähler zählt die Schwingungen eines spannungsgesteuerten Oszillators, dessen Steuereingang mit dem Ausgangsanschluß der Widerstandskette verbunden ist. Nur wenn an diesem Ausgang der Spannungswert Null erscheint, bleibt der Oszillator stehen und der vom Zähler erreichte Zählwert stellt den gesuchten Meßwert m bzw. m' dar.

Mit anderen Worten: Mit Hilfe der beschriebenen Rechenschaltung, die in Form einer Regelschleife aufgebaut ist, werden die Eingangssignale $\Delta a$ und $\Delta b$ mit den Faktoren m und 1-m bzw. 1-m' und 1+m' gewichtet und dann summiert. Die Größe m bzw m' wird so lange verändert, bis das Summensignal gleich 0 ist. Dies entspricht einer Auflösung der obigen Gleichung (1) nach

$$\Delta a \cdot (1-m) - m \cdot \Delta b = 0 \qquad (3),$$

wobei ein besonderer Vorteil darin zu sehen ist, daß m gleich als Digitalwort zur Verfügung steht.

Um eine hohe Auflösung zu erzielen, können statt einer Widerstandsreihenschaltung zwei hierarchisch gestaffelt angeordnete Widerstandsketten vorgesehen sein, von denen die erste in der oben beschriebenen Weise die vorverstärkten Eingangssignale $\Delta a$, $\Delta b$ empfängt. Die Schalter, die den Abgriffspunkten dieser ersten Widerstandskette zugeordnet sind, führen alternierend auf den einen bzw. den anderen Endpunkt der zweiten Widerstandskette, die ebenfalls durch Schalter in der oben beschriebenen Weise mit dem Ausgangsanschluß dieser Anordnung verbunden ist. Von den der ersten Widerstandskette zugeordneten Schaltern sind immer zwei unmittelbar aufeinanderfolgende gleichzeitig geschlossen, während alle anderen offen sind. Durch das Durchtakten dieser geschlossenen Schalterpaare mit Hilfe der höherwertigen Bits des vom Zähler gelieferten Digitalwortes wird eine Grobteilung realisiert. Die auf der Ausgangsseite der zweiten Widerstandskette befindlichen Schalter werden für jedes geschlossene Schalterpaar der ersten Widerstandskette mit Hilfe der geringerwertigen Bits des Digitalwortes der Reihe nach einzeln geschlossen, wie dies oben für die Schalter der einzelnen Widerstandskette beschrieben wurde. Die zweite Widerstandskette stellt somit eine Feinteilung dar. Mit einer solchen gestaffelten Anordnung läßt sich beispielsweise mit 2 x 64 Widerständen eine Auflösung von 12 Bit erreichen, für die bei Verwendung von einer einzigen Widerstandsreihenschaltung 1024 Widerstände erforderlich wären.

Allerdings läßt sich dieses Prinzip der hierarchischen Staffelung mehrerer Widerstandsketten nicht beliebig fortsetzen, da für die Entkoppelung jeder der gemeinsam zu den nachgeordneten Widerstandsketten führenden Leitungen ein eigener Operationsverstärker nötig ist, so daß der hierfür erforderliche Aufwand die bei den Widerständen erzielten Einsparungen rasch übersteigt.

Demgegenüber liegt der Erfindung die Aufgabe zugrunde, einen induktiven Stellungsgeber der eingangs genannten Art so weiterzubilden, daß mit einem möglichst geringen schaltungstechnischen Aufwand eine hohe Auflösung und eine große Meßgenauigkeit erzielt werden können.

Zur Lösung dieser Aufgabe sieht die Erfindung die im Anspruch 1 zusammengefaßten Merkmale vor.

Der die Eingangsstufe der Schaltungsanordnung bildende Multiplexer kann, je nachdem welche Meßspulenanordnung verwendet wird und wie die Rechenschaltung ausgebildet ist, auf mehrere Arten zur Lösung der der Erfindung zugrundeliegenden Aufgabe beitragen, wobei im Idealfall, d.h. bei Verwendung einer besonders vorteilhaften Meßspulenanordnung und einer besonders günstigen Rechenschaltung alle diese Lösungsbeiträge gleichzeitig und einander verstärkend zum Einsatz kommen.

Zunächst sei davon ausgegangen, daß die Schaltungsanordnung mit einer Meßspulenanordnung verwendet wird, bei der gemäß der EP-A-0 528 199 [Art. 54, (3,4) EPü] zwei Meßspulengruppen vorhanden sind, von denen jede zwei Meßspulen umfaßt, die Flächenelemente umschließen, die so angeordnet sind, daß sie exakt aneinander anschließen und den gesamten geometrischen Meßbereich überdecken. Dabei überlappen die Flächenelemente der einen Meßspulengruppe die der anderen und sind in Richtung der Bewegung des Stellungsgebers gegen diese versetzt angeordnet, so daß die beiden von den Meßspulengruppen gelieferten Differenzsignale a und b mit Ausnahme spezieller Nullpunkts-Stellungen ständig unterschiedliche Amplituden aufweisen.

In Verbindung mit einer solchen Meßspulenanordnung, die nur zwei Ausgangs-Differenzsignale liefert, wird der Multiplexer dazu verwendet, diese beiden Differenzsignale zeitlich nacheinander in eine einkanalige Signalverarbeitungsstrecke einzuspeisen, die den Eingangsverstärker der Schaltungsanordnung umfaßt. Dies ist möglich, weil die additiven Störgrößen aus diesen Differenzsignalen bereits eliminiert sind, so daß zeitliche Änderungen dieser additiven Störungen trotz der nicht gleichzeitigen Weiterleitung der zu verarbeitenden Signale zu der der einkanaligen Signalverarbeitungsstrecke nachgeschalteten Rechenschaltung keine Rolle spielen.

Die einkanalige Eingangsverstärkung bringt folgenden Vorteil: Da die Meßspulen des induktiven Stellungsgebers eine niederohmige Signalquelle darstellen, sollte der Eingangsverstärker zu Erzielung einer hohen Meßgenauigkeit einen hochohmigen Eingang aufweisen. Damit ist aber auch die Eingangs-Offset-Spannung hoch, die jedoch bei den hier vorzugsweise zur Verwendung kommenden SC-Verstärkern nicht mitverstärkt wird. Bei zweikanalig arbeitenden Schaltungsanordnungen müssen dennoch Paare von Eingangsverstärkern verwendet werden, die hinsichtlich ihrer Eingangs-Offset-Spannung und vor allem deren Temperaturabhängigkeit sehr sorgfältig aufeinander abgestimmt sind. Dies ist bereits bei einem diskreten Aufbau kostspielig und führt bei einer Ausführung der Schaltungsanordnung als integrierte Schaltung zu einer erheblichen Verteuerung. Zwar sind aus dem Stand der Technik Schaltungsanordnungen bekannt, bei denen versucht wird, die Eingangs-Offset-Spannung, die eine Gleichspannungsgröße ist, durch kapazitive Auskopplung der Ausgangssignale zu eliminieren. Verwendet man dagegen erfindungsgemäß nur einen einzigen Eingangsverstärker, so gehen dessen Eingangs-Offset-Spannung und Verstärkungsfaktor in alle den Rechenschaltungen zugeführten Signale in gleicher Weise ein und können aus dem Meßergebnis auf einfache Weise eliminiert werden. Somit ergibt sich gegenüber der zweikanaligen Anordnung ein erheblich verminderter schaltungstechnischer und damit auch kostenmäßiger Aufwand.

Bei der in der EP-A-0 528 199 [Art.54, (3,4) EPü] beschriebenen Meßspulenanordnung sind zur Vergrößerung des mit hoher Linearität überdeckbaren Meßbereiches mehr als zwei Meßspulengruppen vorgesenen, wobei wieder jede Gruppe zwei Meßspulen umfaßt, die exakt so aneinander anschließen, daß sie den gesamten Meßbereich (beispielsweise bei einem Drehgeber 360°) überdecken, und die gemeinsam ein Differenzsignal liefern, aus dem die additiven Störungen bereits eliminiert sind. Auch hier sind die Flächenelemente der verschiedenen Meßspulengruppen in Bewegungsrichtung gegeneinander versetzt angeordnet (beispielsweise bei einem Drehgeber und drei Meßspulengruppen um jeweils 60° oder bei vier Meßspulengruppen um jeweils 45°).

In diesem Fall stehen also ständig ebenso viele Differenzsignale zur Verfügung, wie Meßspulengruppen vorhanden sind.

Da die Rechenschaltung aus dieser Vielzahl von Differenzsignalen immer nur zwei benötigt, um nach dem eingangs geschilderten Verfahren den Meßwert M exakt zu ermitteln, kann der Multiplexer hier dazu verwendet werden, alle möglichen Zweierkombinationen dieser Differenzsignale durchzuspielen, bis diejenige gefunden ist, bei der es gelingt, die dem spannungsgesteuerten Oszillator zugeführte Spannung auf Null abzugleichen.

Mit anderen Worten: Der Multiplexer übernimmt hier in Verbindung mit der Meßspulenanordnung durch eine entsprechende Ansteuerung die Ermittlung eines übergeordneten Grobmeßwertes bzw. der höchstwertigen Bits eines den exakten Meßwert darstellenden Digitalwortes. Geht man davon aus, daß die Rechenschaltung in der oben beschriebenen Weise zwei hierarchisch gestaffelte Widerstandsketten oder äquivalente Schaltungsanordnungen umfaßt, so wird durch die Kombination des Multiplexers mit der beschriebenen Meßspulenanordnung eine übergeordnete hierarchische Ebene geschaffen, die von den Meßspulengruppen selbst gebildet wird und ohne zusätzliche Entkopplungsverstärker oder dergleichen auskommt.

Dabei werden die zu jedem der durchpermutierten Paare von Differenzsignalen gehörenden Signale der Rechenschaltung über die den Eingangsverstärker umfassende einkanalige Signalverarbeitungsstrecke nacheinander zugeführt, was die oben beschriebenen Vorteile mit sich bringt.

Im Regelfall kann davon ausgegangen werden, daß sich multiplikative Störungen so langsam ändern, daß sie mit gleichen Anteilen in Signale eingehen, die wegen der Einkanaligkeit der Anordnung nacheinander erfaßt werden. Dann führt die Quotientenbildung bei einer im Eingangsteil einkanaligen Signalverarbeitung zu der gewünschten vollständigen Korrektur.

Wird die zuletzt beschriebene Meßspulenanordnung in Form einer gedruckten Schaltung ausgebildet, so ergibt sich das Problem, daß für jede Meßspulengruppe eine eigene Leitbahnebene benötigt wird, was zu Justierproblemen führen kann.

Um dies zu vermeiden, können bei der in der EP-A-0 528 199 [Art.54, (3,4) EPü] beschriebenen Meßspulenanordnung die für die momentane Differenzsignalgewinnung benutzten Meßspulengruppen dadurch über den Meßbereich hinweg "verschoben" werden, daß in Leitern, die einander benachbarte Flächenbereiche voneinander trennen, steuerbare EIN/AUS-Schalter vorgesehen sind, die im geschlossenen Zustand den betreffenden, auch als "Trennsteg" bezeichneten Leiter in der Weise aktivieren, daß er die beiden an ihn angrenzenden Flächenelemente so voneinander trennt, daß sie zu verschiedenen Meßspulen gehören, und die im geöffneten Zustand die Trennfunktion des betreffenden Leiters aufheben, so daß die beiden an ihn angrenzenden Flächenelemente von ein und derselben Meßspule umschlossen werden.

Die steuerbaren EIN/AUS-Schalter, die für dieses "Mitwandern" der aktiven Flächenelemente mit der zu überwachenden Bewegung betätigt werden müssen, können vorteilhafterweise in den beschriebenen Multiplexer integriert sein und durch die ihm zugeführten Ansteuersignale mitbetätigt werden. Ansonsten kann der Multiplexer bei dieser Meßspulenanordnung ebenso für die Ermittelung der höchstwertigen Bits unmittelbar mit Hilfe der Meßspulenanordnung und/oder für eine einkanalige bzw. zweikanalige Eingangssignalverarbeitung verwendet werden, wie dies oben beschrieben wurde.

Während bei den bisher erläuterten Meßspulenanordnungen gemäß der EP-A-0 528 199 [Art.54, (3,4) EPü] die Differenzsignale dadurch erzeugt werden, daß die Meßspulen einer Gruppe gemeinsame Leiter aufweisen, ist in der EP-A-0 528 199 darüber hinaus eine Anordnung beschrieben, bei der der gesamte Meßbereich durch eine Vielzahl von Flächenelementen abgedeckt ist, die zwar ebenfalls in Bewegungsrichtung exakt aneinander anschließen, von denen aber jedes von einer eigenen Meßspule umschlossen wird, die mit keiner anderen Meßspule gemeinsame Leiterabschnitte aufweist. Hier werden zur Eliminierung der additiven Störungen die Ausgänge von jeweils zwei Meßspulen, die dann wieder eine Meßspulengruppe bilden, so fest miteinander verschaltet, daß jedes Meßspulenpaar eine Differenzspannung liefert, die zu der oben geschilderten Bildung eines Quotienten m' herangezogen werden kann. Auch hier stehen ständig mehr als zwei Differenzsignale zur Verfügung und der Multiplexer wird wieder dazu verwendet, die für die jeweilige Geberstellung erforderliche Auswahl zu treffen. Auch in diesem Fall zieht der Multiplexer die Meßspulenanordnung zur Ermittlung der höchstwertigen Bits eines den exakten Meßwert darstellenden Digitalwortes heran, indem er durch entsprechendes Schließen und Öffnen von Schaltern die aktiven Meßspulen sich mit der Geberbewegung "mitbewegen" läßt.

Ein weiterer Vorteil der Verwendung eines Multiplexers ist darin zu sehen, daß er auf einfache Weise die Vertauschung von Meßspulenausgangsanschlüssen zur Vorzeichenänderung der weiterzuverarbeitenden Spannungen ermöglicht. Dadurch ergibt sich ein vereinfachter Aufbau der nachfolgenden Signalverarbeitungsschaltungen.

Vorteilhafte Weiterbildungen des erfindungsgemäßen induktiven Stellungsgebers und seiner Schaltungsanordnung, insbesondere der in ihr verwendeten Rechenschaltung, sind in den abhängigen Ansprüchen niedergelegt.

Die Erfindung wird im folgenden anhand von Ausführungsbeispielen unter Bezugnahme auf die Zeichnung beschrieben; in dieser zeigen:

Fig. 1          einen induktiven Drehgeber,

Fig. 2          einen Schnitt durch den Drehgeber der Fig. 1 längs der Linie II-II,

Fig. 3          eine erste Schaltungsanordnung, bei der die von der Meßspulenanordnung gelieferten Wechselspannungssignale nach ihrer Verstärkung und vor der Scheitelwertermittelung gewichtet werden,

Fig. 4          eine weitere Schaltungsanordnung, bei der die Gewichtung nach der Amplitudenwertermittelung stattfindet und durch eine externe Widerstands-Reihenschaltung das Auflösungsvermögen erhöht wird, und

Fig. 5 bis 7    Meßspulenanordnungen, die mit dem Drehgeber aus den Fig. 1 und 2 und einen Schaltungsanordnung Verwendung finden können, wie sie in den Fig. 3 oder 4 gezeigt ist.

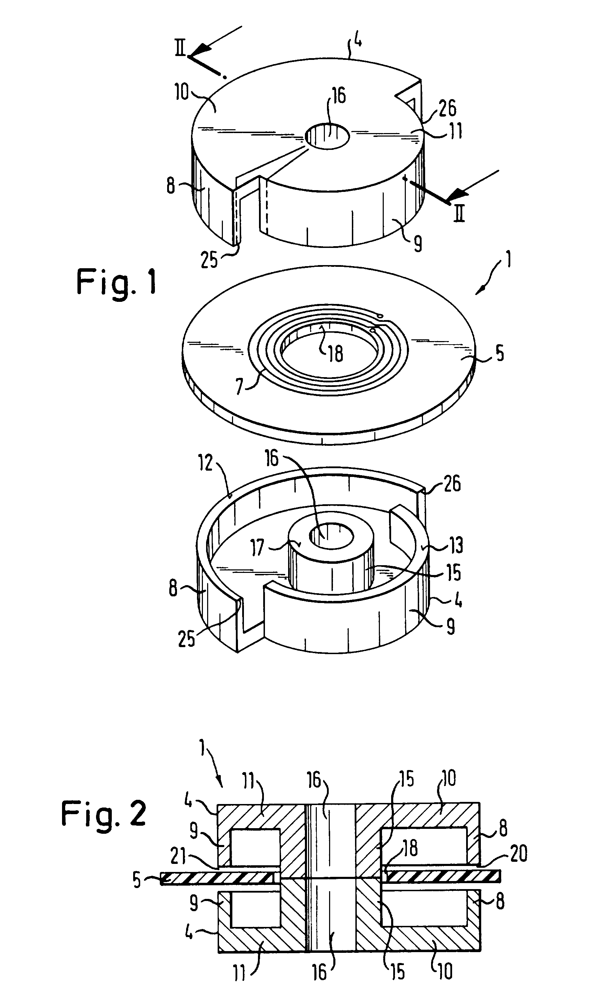

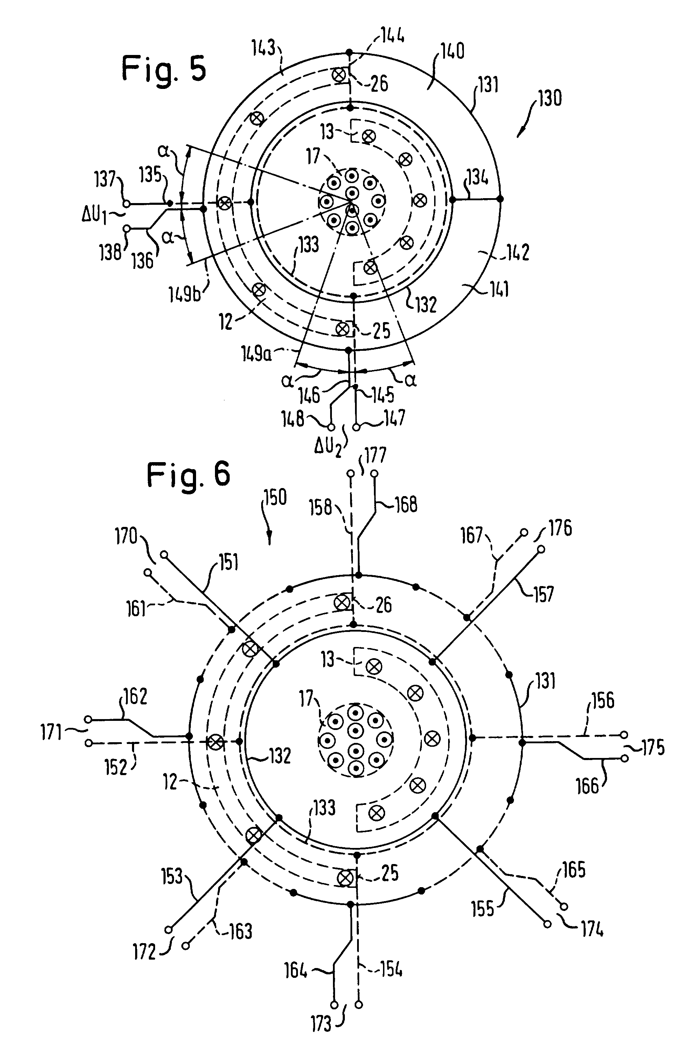

In den Fig. 1 und 2 ist ein Beispiel für den mechanischen Aufbau eines Drehgebers 1 dargestellt, der zur messenden Überwachung der Drehbewegung verwendet wird, die der eine von zwei nicht dargestellten Körpern bezüglich des anderen ausführt. Dieser Drehgeber umfaßt zwei identische Kernschalen 4, 4 sowie eine Trägerplatine 5, auf der in Form von gedruckten Schaltungen sowohl eine Erregerspule 7 als auch in Fig. 1 weggelassene Meßspulen angebracht sind, die weiter unten unter Bezugnahme auf die Fig. 5 bis 7 genauer erläutert werden.

Jede der beiden Kernschalen 4, 4 besteht aus zwei einstückig miteinander verbundenen, hohlen, einseitig durch eine Bodenwand 10, 11 abgeschlossenen Halbzylindern, die unterschiedliche Radien besitzen und so angeordnet sind, daß ihre Zylinderachsen und ihre längs des jeweiligen Zylinderdurchmessers verlaufenden Ränder zusammenfallen, wobei ihre nach außen gekrümmten Halbzylinderwände 8, 9 voneinander weg orientiert sind.

Die beiden Bodenwände 10, 11, die die gleiche axiale Dicke besitzen können, gehen einstückig ineinander über. Ein zentral angeordneter, einstückig verbundener Zapfen 15 erstreckt sich in axialer Richtung und besitzt eine axiale Höhe, die größer als die der Halbzylinderwände 8, 9 ist. In Längsrichtung ist der Zapfen 15 von einer konzentrischen Bohrung 16 durchzogen, die zur Aufnahme einer Welle dienen kann, um deren Achse die beiden Körper, deren gegenseitige Stellung messend überwacht werden soll, verdrehbar sind. Im zusammengebauten Zustand (Fig. 2) sind die beiden Kernschalen 4, 4 so miteinander fest verbunden, daß die Stirnflächen 17, 17 der Zapfen 15, 15 aneinander anliegen, wobei die Bohrungen 16, 16 miteinander fluchten und sich die axialen Stirnflächen 12, 12 bzw. 13, 13 der Halbzylinderwände 8, 8 bzw. 9, 9 im Abstand gegenüberliegen und zwischen sich die Spalte 20, 21 einschließen.

Die Trägerplatine 5 ist als Kreisscheibe mit einer zentralen Öffnung 18 ausgebildet, deren Durchmesser etwas größer als der Außendurchmesser der Zapfen 15, 15 ist.

Gemäß Fig. 2 wird die Trägerplatine 5 so angeordnet, daß sich die beiden Zapfen 15, 15 durch ihre zentrale Öffnung 18 hindurch erstrecken und sie parallel zu den Bodenwänden 10, 11 der Kernschalen 4, 4 verläuft, wobei sie sich durch die Spalte 20, 21 erstreckt. Für den Betrieb wird die Trägerplatine 5 mit dem einen der beiden nicht dargestellten Körper, deren relative Drehbewegung überwacht werden soll, drehfest verbunden, während die beiden Kernschalen 4, 4 mit dem anderen der beiden Körper in drehfester Verbindung stehen.

Dem von der Erregerspule 7 erzeugten Magnetfluß werden zwei weitgehend symmetrische, im wesentlichen den gleichen magnetischen Widerstand besitzende, ringförmig geschlossene Wege, nämlich ein Meßweg und ein Ausgleichsweg angeboten. Der Meßweg erstreckt sich unter anderem über den zwischen den Halbzylinderwänden 8, 8 eingeschlossenen Spalt 20 hinweg, so daß der Magnetfluß, der diesem Weg folgt, die auf der Trägerplatine 5 angeordneten Meßspulen durchsetzen kann.

Da die Teil-Magnetflüsse durch den Meßweg und den Ausgleichsweg stellungsunabhängig konstant sind, zeichnet sich ein derartiger Drehgeber durch eine hohe Symmetrie aus und ist absolut rückwirkungsfrei. Er kann mit jeder der in den Fig. 5 bis 7 dargestellten Meßspulenanordnungen verwendet werden, die aufgrund ihrer unterschiedlichen Eigenschaften für jeweils andere Einsatzfälle besonders vorteilhaft sind.

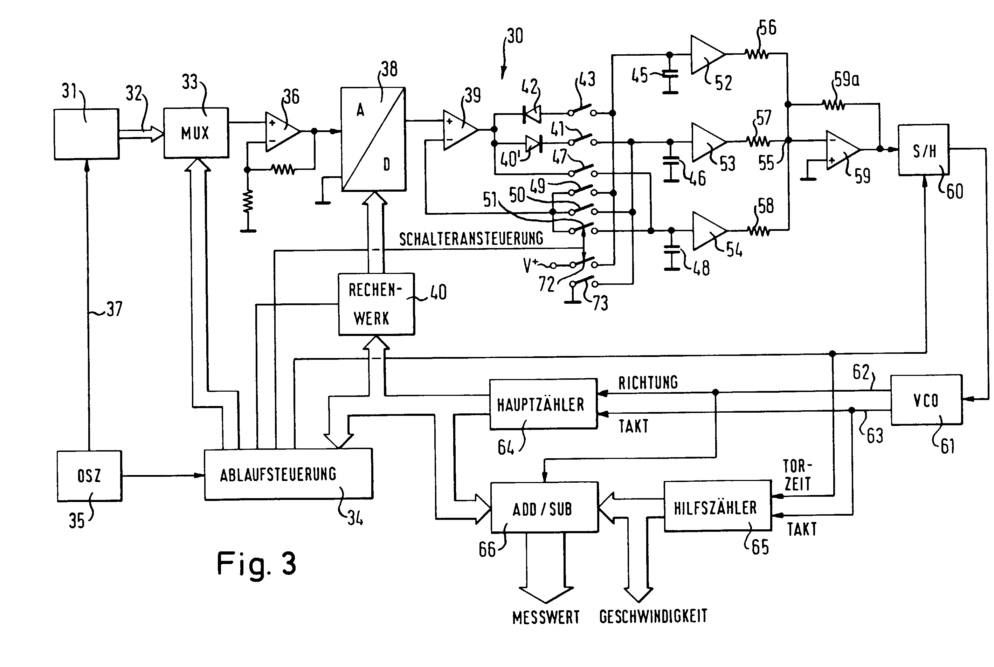

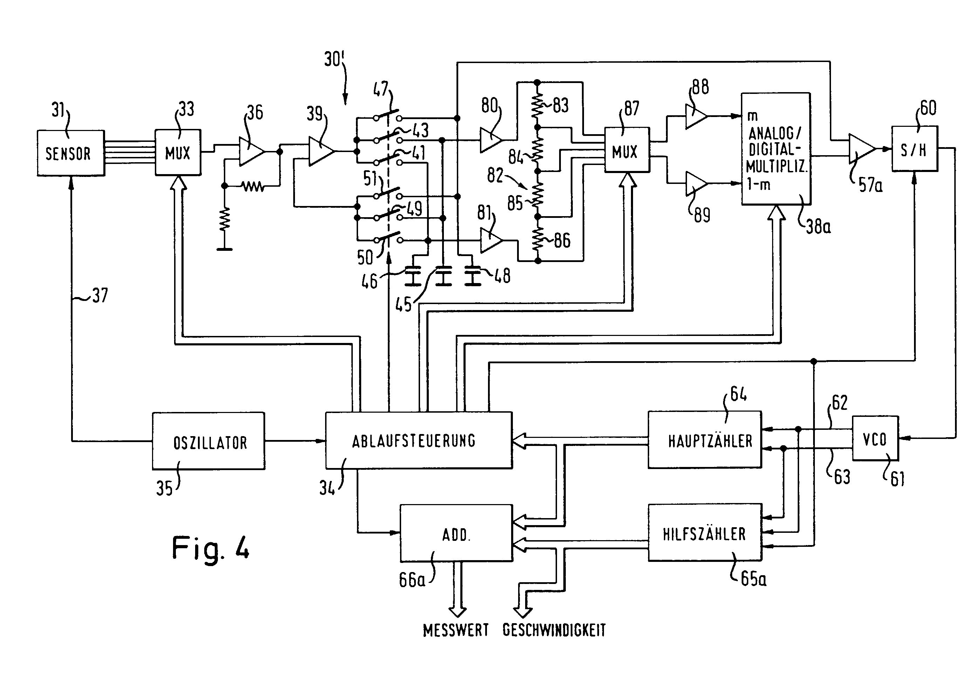

Letzteres gilt auch für die in den Fig. 3 und 4 dargestellten Schaltungsanordnungen 30,30: Daher ist in diesen Figuren der die Meßspulenanordnung umfassende Sensor nur schematisch als Block 31 wiedergegeben, der über eine Vielfachleitung 32 mit einem Multiplexer 33 verbunden ist, der die Eingangsstufe der Schaltungsanordnung 30 bzw. 30' bildet und seine Steuersignale von einer Ablaufsteuerung 34 erhält, die mit einem die Taktfrequenz liefernden Oszillator 35 verbunden ist, der auch gleichzeitig über eine Leitung 37 die Erregerspule des sensors 31 ansteuert.

Die Anzahl der von der Vielfachleitung 32 umfaßten einzelnen Signalleitungen hängt von der Art der jeweils verwendeten Meßspulenanordnung ab und wird bei deren Beschreibung noch genauer erlautert.

Im vorliegenden Zusammenhang ist lediglich von Bedeutung, daß die Meßspulenanordnung ständig zwei oder mehr Signale liefert, die entweder direkt Differenzsignale darstellen, aus denen additive Störungen bereits eliminiert sind, oder aus denen unmittelbar im Multiplexer 33 solche Differenzsignale gebildet werden können. Liefert die Meßspulenanordnung nur zwei solche Signale, so hat der Multiplexer 33 lediglich die Aufgabe, diese in die nachfolgende einkanalige Signalverarbeitungsstrecke zeitlich nacheinander einzuspeisen. Sind an der Meßspulenanordnung mehr als zwei Ausgangssignale ständig vorhanden, so muß der Multiplexer 33 überdies dasjenige Signalpaar auswählen, das schließlich zur Bildung des die momentane Geberstellung wiedergebenden Meßwertes herangezogen wird.

Für die nachfolgende allgemeine Beschreibung der Schaltungsanordnungen 30,31 wird lediglich vorausgesetzt, daß zwei (verstärkte) Signale a und b weiterverarbeitet werden müssen, bei denen es sich zunächst um Wechselspannungssignale und im weitern Verlauf der Verarbeitung um die Gleichspannungs-Amplitudenwerte A und B dieser Wechselspannungssignale handelt. Dabei liegt zu jedem gegebenen Zeitpunkt einer dieser Gleichspannungsamplitudenwerte, beispielsweise A als positive Spannung, und einer, beispielsweise -B, als negative Spannung vor. Es Erfolgt eine Multiplikation mit Faktoren f bzw. g, und die so erhaltenen gewichteten Signale $A \cdot f$ und $-B \cdot g$ werden summiert. Die Gewichtungsfaktoren f und g müssen dann so lange verändert werden, bis die Summe $A \cdot f + (-B) \cdot g$ einen vorgegebenen Wert, beispielsweise den Wert "0" annimmt. Je nach Art der verwendeten Meßspulenanordnung können die Faktoren f und g in unterschiedlicher Weise miteinander korreliert sein. Dies wird im Zusammenhang mit der Beschreibung dieser Meßspulenanordnungen unten noch genauer erläutert.

Hier ist von Bedeutung, daß die gewichteten Signale nur in der Form (A+off)·f bzw. (-B+off)·g erzeugt werden können, wobei "off" die Offset-Eingangsspannung eines dem Multiplexer 33 unmittelbar nachgeschalteten Eingangsverstärkers 36 ist. Als Summe der gewichteten Signale ergibt sich daher der Ausdruck A·f + (-B)·g + off·(f+g) , von dem der letzte Term subtrahiert werden muß, um den eigentlich gewünschten Ausdruck A·f+(-B)·g zu erhalten. Da, wie weiter unten noch erläutert wird, die eben erwähnte Summation und Subtraktion mit Hilfe einer summierenden Analogschaltung durchgeführt wird, müssen die Ausdrücke (A+off)·f, (-B+off)·g und -off·(f+g) wegen der zunächst einkanaligen Verarbeitung zwischengespeichert werden.

Es ist daher für jeden dieser drei Werte eine Speicherschaltung vorgesehen, in die der zugehörige Wert eingegeben und so lange gespeichert wird, bis die jeweils beiden anderen Werte zur Verfügung stehen. All dies geschieht unter der Regie der Ablaufsteuerung 34, die drei verschiedene Zeiträume definiert, in denen der Multiplexer 33 und die ihm nachgeschaltete einkanalige Signalverarbeitungsstrecke die Signale (A+off)·f, (-B+off)·g und -off·(f+g) erzeugen.

Das bisher Gesagte gilt für die beiden Schaltungsanordnungen 30 und 30' in den Figuren 3 und 4 in analoger Weise. Bei beiden legt der Multiplexer 33 zur Bildung der Ausdrücke (A+off)·f und (-B+off)·g zunächst das jeweils entsprechende Meßspulensignal an die nachfolgende einkanalige Signalverarbeitungsstrecke, die im Fall der Fig. 3 neben dem Eingangsverstärker 36 einen die Multiplikation durchführenden Digital/Analog-Wandler 38 und einen Verstärker 39 zur Ansteuerung der für die oben erwähnte Speicherung erforderlichen Speicherschaltungen 45 und 46 umfaßt. In Fig. 4 sind in dieser einkanaligen Signalverarbeitungsstrecke dagegen nur der Eingangsverstärker 36 und die Treiberstufe 39 enthalten, während die multiplizierende Digital/Analog-Wandlerschaltung 38a erst hinter den Speicherschaltungen 45, 46, d.h. im zweikanaligen Bereich angeordnet ist. Mit anderen Worten: Bei der Ausführungsform nach Fig. 3 werden die Wechselspannungssignale der Meßspulenanordnung nach ihrer Verstärkung erst gewichtet und dann gleichgerichtet und summiert, während sie bei der Ausführungsform nach Fig. 4 sofort gleichgerichtet und die sich aus ihnen ergebenden Gleichspannungswerte durch Multiplikation gewichtet und summiert werden.

Die grundsätzliche Funktion der Schaltungsanordnung wird nun zunächst anhand von Fig. 3 beschrieben.

Die Digital/Analog-Wandlerschaltung 38 arbeitet dadurch als Multiplizierer, daß ihrem Digitaleingang ein Digitalwort zugeführt wird, das ein Rechenwerk 40 unter der Regie der Ablaufsteuerung 34 aus dem Zählwert bildet, den ein Hauptzähler 64 zu dem betreffenden Zeitpunkt erreicht hat. Dabei steuert die Ablaufsteuerung 34 das Rechenwerk 40 so, daß es aus diesem Zählwert in dem Zeitraum, in dem am Ausgang des Eingangsverstärkers 36 das Signal (a+off) anliegt, ein dem Faktor f entsprechendes Digitalwort formt. In einem Zeitraum, in dem am Ausgang des Eingangsverstärkers 36 das Signal (b+off) erscheint, erzeugt das Rechenwerk 40 dagegen ein dem Faktor g entsprechendes Digitalwort und in Zeiträumen, in denen der Multiplexer 33 aufgrund entsprechender Steuersignale der Ablaufsteuerung 34 den Eingang des Eingangsverstärkers 36 kurzschließt, so daß an dessen Ausgang nur noch das Signal "off" erscheint, ein dem Ausdruck -(f+g) entsprechendes Digitalwort.

Der Digital/Analog-Wandler 38 multipliziert das jeweils an seinen Referenzspannnungseingängen gegen Masse anliegende Analogsignal mit dem durch das entsprechende Digitalwort vorgegebenen Faktor, so daß in den verschiedenen Zeiträumen an seinem Ausgang die um den Gleichspannungsoffset off verschobenen Wechselspannungssignale (a+off)·f und (b+off)·g und das Gleichspannungssignal -off·(f+g) erscheinen.

Der Ausgang des Digital-Analog-Wandlers 38 ist mit dem "Plus"-Eingang eines Differenzverstärkers 39 verbunden, dessen Ausgang über eine in Durchlaßrichtung gepolte Diode 40' mit einem steuerbaren Schalter 41 und über eine in Sperrichtung gepolte Diode 42 mit einem steuerbaren Schalter 43 verbunden ist, von denen der Schalter 43 zu einem Speicherkondensator 45 und der Schalter 41 zu einem Speicherkondensator 46 führt. Außerdem ist der Ausgang des Differenzverstärkers 39 unmittelbar über einen steuerbaren Schalter 47 mit einem Speicherkondensator 48 verbunden.

Weiterhin ist der "Minus"-Eingang des Differenzverstärkers 39 über einen steuerbaren Schalter 49 mit dem Verbindungspunkt zwischen dem Schalter 43 und dem Kondensator 45, über einen steuerbaren Schalter 50 mit dem Verbindungspunkt zwischen dem Schalter 41 und dem Kondensator 46 und über einen steuerbaren Schalter 51 mit dem Verbindungspunkt zwischen dem Schalter 47 und dem Kondensator 48 verbunden.

Liefert der Ausgang des Digital-Analog-Wandlers 38 das überlagerte Wechselspannungssignal (a+off)·f, so schließt die Ablaufsteuerung die Schalter 41 und 50, während die Schalter 43, 47 und 49, 51 geöffnet sind.

Dadurch kann die erste positive Halbwelle des eben erwähnten Wechselspannungssignals den Speicherkondensator 46 über die Diode 40' und den geschlossenen Schalter 41 auf ihren Scheitelwert aufladen. Ist der Scheitelwert überschritten, entlädt sich der Kondensator 46 wegen der Gleichrichterwirkung der Diode 40' nicht. Die Rückkopplung über den Schalter 50 dient dazu, die Durchbruchspannung der Diode 40' und den Schalterwiderstand des Schalters 41 zu kompensieren, d.h. nicht in den vom Speicherkondensator 46 gespeicherten Spannungswert (A+off)·f eingehen zu lassen.

Erscheint dagegen am Ausgang des Digital-Analog-Wandlers 38 die Wechselspannung (b+off)·g, so schließt die Ablaufsteuerung 34 die Schalter 43 und 49 und öffnet die Schalter 41, 47, 50 und 51. Dadurch wird in der gleichen Weise, wie dies eben für den Kondensator 46 beschrieben wurde, nunmehr der Speicherkondensator 45 durch die erste negative Halbwelle des Wechselspannungssignals (b+off)·g auf den negativen Amplituden-Spitzen-wert (-B+off)·g aufgeladen.

Mit Hilfe des Multiplexers 33 kann durch entsprechende Vertauschung der Meßspulenanschlüsse jede Halbwelle "positiv" bzw. "negativ" gemacht werden, so daß sie zum Laden der Speicherkondensatoren 46, 45 verwendet werden kann. Dadurch wird die hier beschriebene Spitzenwert-Detektionsschaltung besonders einfach und es muß nicht jede zweite Halbwelle bei der Signalverarbeitung ausgelassen werden. Somit wird die Meßgeschwindigkeit wesentlich erhöht.

In einer dritten Phase, in der der Multiplexer 33 den Eingang des Eingangsverstärkers 36 kurzschließt und die Ablaufsteuerung das Rechenwerk 40 zur Erzeugung des Digitalwortes -(f+g) veranlaßt, erscheint am Ausgang des Differenzverstärkers 39 der Gleichspannungswert -off·(f+g), der bei geöffneten Schaltern 41, 43, 49, 50 und geschlossenen Schaltern 47, 51 den Speicherkondensator 48 auflädt und in diesem gespeichert wird.

Somit stehen nach Abschluß dieser dritten Phase an den Speicherkondensatoren 45, 46 und 48 die für die oben erwähnte Summation und Korrektur erforderlichen Spannungswerte zur Verfügung, die über Impedanzwandler 52, 53, 54, deren hohe Eingangswiderstände ein Entladen der Speicherkondensatoren 45, 46, 48 verhindern, auf ein Summations-Netzwerk gegeben werden, das von Widerständen 56, 57, 58, die von den Impedanzwandler-Ausgängen zu einem Summationspunkt 55 führend, einem mit seinem "Minus"-Eingang mit diesem Summationspunkt verbundenen Operationsverstärker 59 und einem vom Ausgang des Operationsverstärkers 59 zurück zum Summations punkt 55 führenden Rückkoppelwiderstand 59a gebildet wird.

Somit erscheint nach Erzeugung und Speicherung der Signale (A+ off)·f, (-B+off)·g und -off·(f+g) am Ausgang des Operationsverstärkers 59 das von der Eingangsoffset-Spannung des Eingangsverstärkers 36 befreite Gleichspannungs-Summensignal A·f+(-B)·g, das durch die im folgenden noch genauer erläuterte Regelschleife der Schaltungsanordnung 30 zur Ermittlung des die momentane Geberstellung wiedergebenden Meßwertes gleich Null gemacht werden soll.

Dieses Summensignal, das sowohl positive als auch negative Spannungswerte annehmen kann, wird in einer Sample-and-Hold-Schaltung 60 für die nächste, von der Ablaufsteuerung 34 vorgegebene Zykluszeit unveränderlich zwischengespeichert und an den Steuereingang einer Schaltungseinheit 61 gelegt, die einen spannungsgesteuerten Oszillator umfaßt und zwei Ausgänge 62, 63 besitzt. Am "Richtungs"-Ausgang 62 erscheint ein Signal, das das Vorzeichen der in der Sample-and-Hold-Schaltung 60 gespeicherten Spannung wiedergibt, während am "Impuls"-Ausgang 63 Taktimpulse des spannungsgesteuerten Oszillators erscheinen, deren Folgefrequenz sich mit dem Absolutwert der in der Sample-and-Hold-Schaltung 60 gespeicherten Spannung ändert und gleich Null wird, wenn diese Spannung den Wert Null annimmt.

Der Ausgang 63 des Schaltungseinheit 61 liefert die Taktimpulse für den Hauptzähler 64, dessen Zählrichtung durch das am Richtungsausgang 62 des Schaltungseinheit 61 erscheinende Signal bestimmt wird.

Solange also das in der Sample-and-Hold-Schaltung 60 gespeicherte Summensignal nicht den Wert Null besitzt, zählt der Zähler 64 aufwärts oder abwärts und zwar mit um so größerer Geschwindigkeit, je höher der Absolutwert des Summensignals ist.

Nimmt man an, daß das Summensignal einen von Null verschiedenen Wert hat, so ändert der Zähler 64 seinen Zählerstand so, daß beim nächsten von der Ablaufsteuerung 34 durchgeführten Meßzyklus dem Rechenwerk 40 ein vom vorausgehenden Meßzyklus verschiedener Zählwert zugeführt wird. Dadurch erzeugt das Rechenwerk 40 andere Faktoren f' und g' als beim vorausgehenden Zyklus, so daß nunmehr bei unveränderten Meßspulensignalen am Ausgang des Differenzverstärkers 39 neue Signale (A+off)·f', (-B+off)·g' und -off·(g'+f') erscheinen. Da die ersten dieser beiden Signale kleiner sein können, als die entsprechenden Signale beim vorausgehenden Zyklus, ist es für ihre ordnungsgemäße Speicherung erforderlich, daß vor ihrer Erzeugung die Speicherkondensatoren 45, 46 völlig entladen worden sind. Dies hat die Ablaufsteuerung 34 vor Beginn des neuen Zyklus mit Hilfe der steuerbaren Schalter 72, 73 durchgeführt, von denen der erste auf die positive Spannung V+ und der zweite auf die Systemmasse führt. Da der die Gleichspannungssignale -off·(f+g) bzw. -off·(f'+g') speichernde Speicherkondensator 48 nicht über die Diode 42 aufgeladen wird, genügt bei ihm für eine eventuelle Spannungsverringerung die Rückkopplung über den Schalter 51.

Die in dem neuerlichen Meßzyklus durchgeführte Änderung der Faktoren f und g in f' und g' erfolgt in der Weise, daß das am Ende dieses neuerlichen Zyklus an die Sample-and-Hold-Schaltung 60 abgegebene Signal näher bei Null liegt als das im vorausgehenden Meßzyklus dort zwischengespeicherte Signal. Durch Festlegung der Steilheit der linearen Spannungs/Frequenz-Kennlinie des spannungsgesteuerten Oszillators kann die Anzahl der Meßzyklen vorgegeben werden, die erforderlich sind, um bei sich nicht ändernder Stellung des induktiven Stellungsgebers das in der Sample-and-Hold-Schaltung 60 zwischengespeicherte Summensignal auf Null zu regeln. Vorzugsweise erfolgt dies innerhalb eines einzigen Meßzyklus. Ist der Nullwert erreicht, so stellt der vom Hauptzähler 64 abgegebene Zählwert einen in digitaler Form vorliegenden Meßwert für die vom induktiven Stellungsgeber eingenommene Position dar.

Ändert sich die Stellung des induktiven Stellungsgebers, so besitzt am Ende des nächsten Meßzyklus das der Sample-and-Hold-Schaltung 60 zugeführte Summensignal nicht mehr den Wert Null und der spannungsgesteuerte Oszillator der Schaltungseinheit 61 beginnt wieder zu schwingen, wodurch der Zählerstand des Hauptzählers 64 so lange geändert wird, bis das Summensignal wieder auf Null abgeglichen ist.

Wie alle Regelschleifen benötigt auch die hier beschriebene Anordnung eine gewisse Nachlaufzeit, bis das vom Zähler 64 abgegebene Positionssignal mit der vom induktiven Stellungsgeber tatsächlich eingenommenen Stellung übereinstimmt. Sollen nun schnelle Bewegungen des Stellungsgebers messend verfolgt werden, so ergibt sich ein sogenannter Schleppfehler, d.h. der vom Hauptzähler 64 abgegebene Zählwert weicht während einer solchen Bewegung ständig von der vom Stellungsgeber eingenommenen, sich verändernden Position um einen Wert ab, der seinerseits von der Änderungsgeschwindigkeit dieser Position abhängig ist.

Verwendet man nun aber die in der genannten EP-A-0 528 199 beschriebenen Meßspulenanordnungen, die einen über den Weg extrem linearen Signalverlauf liefern, so hat die hier beschriebene Schaltungsanordnung die Eigenschaft, daß die Größe des Schleppfehlers ebenfalls linear von der Geschwindigkeit abhängt, mit der sich der Stellungsgeber bewegt. Besitzt der VCO ebenfalls eine lineare Kennlinie ergibt sich die Möglichkeit, mit Hilfe eines Hilfszählers 65 und einer Addier/Subtrahier-Schaltung 66 diesen Schleppfehler so zu korrigieren, daß der von der Schaltungsanordnung 30 abgegebene Meßwert auch bei schnellen Bewegungen des Positionsgebers mit dessen aktueller Stellung übereinstimmt. Zu diesem Zweck werden dem Zähleingang des Hilfszählers 65 ebenfalls die vom spannungsgesteuerten Oszillator erzeugten Zählimpulse zugeführt. Anders als der Hauptzähler 64 summiert der Hilfszähler 65 aber diese Taktimpulse nicht über beliebig viele Meßzyklen auf. Er wird vielmehr von der Ablaufsteuerung 34 über seinen Toreingang so angesteuert, daß er zu Beginn eines jeden Meßzyklus mit dem Wert Null beginnend, die Impulse des spannungsgesteuerten Oszillators 61 zählt, die bis zum Ende des betreffenden Meßzyklus erzeugt werden. Der am Ende des Meßzyklus erreichte Zählerstand des Hilfszählers 65 wird dann von der Addier-Subtrahier-Schaltung 66 zu dem vom Hauptzähler 64 erreichten Zählwert addiert oder von diesem Zählwert subtrahiert, je nachdem, ob das von der Schaltungseinheit 61 abgegebene Richtungssignal ein Vor- oder Nacheilen der vom induktiven Stellungsgeber tatsächlich eingenommenen Position gegenüber dem vom Zähler 64 in Form seines Zählwertes abgegebenen Positionssignal anzeigt.

Mit anderen Worten: Es wird am Ende eines jeden Meßzyklus die beim vorausgehenden Meßzyklus ermittelte Abweichung zwischen der tatsächlichen Geberposition und dem vom Hauptzähler 64 erzeugten Positionssignal zur Korrektur dieses Positionssignals verwendet. Wegen der Linearität der Signalverarbeitung in der gesamten Anordnung führt diese Korrektur zu einer vollständigen Eliminierung des Schleppfehlers, solange sich die Bewegungsgeschwindigkeit des Stellungsgebers nicht ändert. Bleibt der Stellungsgeber stehen, so genügt ein Meßzyklus, um die in der Sample-and-Hold-Schaltung 60 gespeicherte Summenspannung auf Null zu regeln, so daß der spannunggesteuerte Oszillator der Schaltungseinheit 61 keine Taktimpulse mehr abgibt. Dadurch bleibt der Zählerstand des Hilfszählers 65 ebenfalls auf Null und es wird zu dem die erreichte Position korrekt wiedergebenden Zählwert des Hauptzählers 64 weder etwas addiert noch wird von ihm etwas subtrahiert, so daß der von der Schaltungsanordnung 30 abgegebene Meßwert so lange ausschließlich vom Zählerstand des Hauptzählers 64 bestimmt wird, bis wieder eine Bewegung des Stellungsgebers auftritt, die länger als ein Meßzyklus dauert.

Das vom Hilfszähler 65 gelieferte Ausgangssignal kann unabhängig von der eben beschriebenen Korrektur des Stellungsmeßwertes auch als Geschwindigkeitsmeßwert für Bewegungen des Gebers dienen.

Bei einer modifizierten, besonders bevorzugten Ausführungsform der in Fig. 3 gezeigten Schaltungsanordnung sind die Dioden 40' und 42 sowie die steuerbaren Schalter 72, 73 weggelassen, so daß der Ausgang des Differenzverstärkers 39 auch mit den steuerbaren Schaltern 41 und 43 unmittelbar verbunden ist.

Hier werden die Scheitelwerte der vom Digital/Analog-Wandler 38 abgegebenen Wechselspannungen nicht dadurch ermittelt, daß die Dioden 40' bzw. 42 zwar ein Aufladen der Kondensatoren 45, 46 auf diese Werte nicht aber ein Entladen unter das jeweils erreichte Extremum ermöglichen.

Stattdessen steuert hier die Ablaufsteuerung 34 die Schalter 41 bzw. 43 vorzugsweise so, daß sie in einem Zeitraum geschlossen und wieder geöffnet werden, der in der Nähe des jeweiligen Scheitelwertes liegt.Die für die Ermittlung der betreffenden Schaltzeitpunkte erforderliche Information gewinnt die Ablaufsteuerung 34 aus der vorzugsweise vom Oszillator 35 erzeugten Wechselspannung, die über die Leitung 37 der Erregerspule des induktiven Stellungsgebers zugeführt wird, zu dessen Meßsignal-Auswertung die Schaltungsanordnung 30 dient. Dabei wird vorzugsweise ein induktiver Stellungsgeber verwendet, wie er in der genannten EP-A-0 528 199 beschrieben ist.

Da diese Stellungsgeber praktisch verlustfrei arbeiten, besteht zwischen der der Erregerspule zugeführten Wechselspannung und den von der Meßspulenanordnung 31 bzw. dem Digital/Analog-Wandler 38 abgegebenen Ausgangssignalen eine von 180° geringfügig abweichende Phasenverschiebung, die zudem von äußeren Störeinflüssen, wie z.B. Temperaturschwankungen nahezu unabhängig konstant ist. Auch kann eine sich nur wenig ändernde Phasenverschiebung durch eine entsprechende Schaltung im Ergebnis ausgeglichen werden.

Somit ist es möglich, das Wechselspannungssignal für die Erregerspule abzutasten und aus seinem zeitlichen Verlauf die Zeitpunkte zu ermitteln, in denen, wie oben beschrieben, die Schalter 41, 43 geschlossen und geöffnet werden, um die Speicherkondensatoren 46, 45 möglichst exakt auf den jeweiligen Amplituden-Scheitelwert bzw. immer die gleiche Phasenlage besitzende und daher miteinander vergleichbare Amplitudenwerte des Ausgangssignals des Digital/Analog-Wandlers 38 aufzuladen. Gleichzeitig mit dem Schalter 43 wird der Rückkoppelschalter 49 geschlossen und geöffnet, während der Rückkoppelschalter 50 gleichzeitig und gleichsinnig mit dem Schalter 41 betätigt wird.

Diese Rückkopplungen auf den negativen Eingang des Differenzverstärkers 39 dienen dazu, diesem die Spannung zuzuführen, die beim Schließen der Schalter 43, 49 bzw. 41, 50 am jeweils zugehörigen Speicherkondensator 45 bzw. 46 bereits vorhanden sind, damit der Differenzverstärker 39 den Unterschied zwischen dieser Spannung und dem neuen, nunmehr vom Digital/Analog-Wandler 38 abgegebenen Amplitudenwert erkennen und den Speicherkondensator auf diesen Amplitudenwert auf- bzw. entladen kann. Außerdem wird durch diese Rückkoppelung gleichzeitig der an den Innenwiderständen der steuerbaren Schalter 43 bzw. 41 auftretende Spannungsabfall kompensiert.

Die Entladeschalter 72, 73 der in Fig. 3 gezeigten Ausführungsform sind bei dieser digitalen Zeitfilteranordnung nicht mehr erforderlich, da der Differenzverstärker 39 wegen des Wegfalls der Dioden 40', 42 die Speicherkondensatoren 45, 46 sowohl aufals auch entladen kann.

Der besondere Vorteil dieser zweiten Variante, die im übrigen genauso arbeitet wie die in Verbindung mit Fig. 3 beschriebene Schaltungsanordnung, liegt darin, daß bei ihr nur noch solche Störspannungen das Meßergebnis beeinflussen können, die in den Zeitpunkten auftreten, in denen die Ablaufsteuerung 34 die Schalter 43, 49 bzw. 41, 50 schließt und wieder öffnet, während die in Fig. 3 gezeigte Ausführungsform die Speicherkondensatoren 45, 46 auf die jeweiligen Extremalwerte auch dann auflädt, wenn diese von Störspannungen stammen, die zu beliebigen Zeitpunkten auf das Meßsignal aufgeprägt werden und den Scheitelwert absolut übersteigen.

Um die schaltungsinterne Störsignalerzeugung während der "kritischen Zeitpunkte", in denen die Ablaufsteuerung 34 gemäß der zweiten Variante die Schalter 43, 49 bzw. 41, 50 kurzzeitig schließt und wieder öffnet, möglichst klein zu halten, kann vorzugsweise vorgesehen sein, daß die Ablaufsteuerung 34 jeweils in einem kurzen, einen solchen Schaltzeitpunkt umgebenden Zeitraum den spannungsgesteuerten Oszillator der Schaltungsanordnung 61, die Zähler 64 und 65, das Rechenwerk 40 sowie die Addier/Subtrahier-Schaltung 66 vorübergehend stillsetzt.

Bei der in Fig. 4 gezeigten Schaltungsanordnung 30' sind alle Schaltungselemente, die in gleicher Weise in Fig. 3 vorhanden sind, mit denselben Bezugszeichen bezeichnet, und es wird auf ihre im Zusammenhang mit Fig. 3 gemachte Beschreibung Bezug genommen.

Die wesentlichsten Unterschiede zwischen den beiden Ausführungsformen der Figuren 3 und 4 bestehen neben der bereits erwähnten anderen Positionierung des multiplizierenden Digital/Analog/Wandlers 38a darin, daß die in den Speicherschaltungen 45, 46 enthaltenen Gleichspannungswerte A und -B über zwei Impedanzwandler 80, 81, die ein Entladen der Speicherkondensatoren 45, 46 verhindern, an die beiden Enden einer Widerstands-Reihenschaltung 82 gelegt werden, die hier von vier Widerständen 83, 84, 85, 86 gebildet wird. Sowohl die Endpunkte dieser Widerstands-Reihenschaltung 82 als auch alle zwischen den Widerständen 83, 84, 85, 86 vorhandenen Abgriffe sind über jeweils eine eigene Leitung mit einem Multiplexer 87 verbunden, der unter Regie der Ablaufsteuerung 34 immer eine der an einem der Widerstände 83, 84, 85, 86 abfallenden Spannungen an seine beiden Ausgänge weitergibt, die über Treiberstufen 88, 89 mit den beiden Analog-Eingängen des Digital/Analog-Wandlers 38a verbunden sind, der in entsprechender Weise, wie dies oben beschrieben wurde, von einem hier nicht gesondert dargestellten, sondern in die Ablaufsteuerung 34 integriert gedachten Rechenwerk Digitalworte erhält, die den vom Hauptzähler 64 erreichten Zählerstand darstellen. Da hier die Summation bzw. Subtraktion der beiden von Ausgangssignalen der Meßspulenanordnung abgeleiteten Signale bereits an der Widerstands-Reihenschaltung 82 stattfindet, erscheint am Ausgang des Digital/Analog-Wandlers 38a bereits das interessierende Gleichspannungs-Summensignal $A \cdot f+(-B) \cdot g+off$, von dem nur noch die Eingangs-Offset-Spannung des Eingangsverstärkers 36 abgezogen werden muß. Wenn die Summe von f und g wie hier gleich 1 ist, benötigt der Digital/Analogwandler in jedem Meßzyklus nur ein Digitalwort. Dadurch werden Störungen innerhalb der integrierten Schaltung minimiert. Die Eingangs-Offset-Spannung wird in der gleichen Weise mit Hilfe der steuerbaren Schalter 47, 51 und des Speicherkondensators 48 ermittelt, wie dies im Zusammenhang mit Fig. 3 erläutert wurde. Die Subtraktion erfolgt im Differenzverstärker 57a, an dessen Ausgang dann das auf Null zu regelnde Meßsignal erscheint, das wie oben beschrieben, in einer Sample-and-Hold-Schaltung 60 zwischengespeichert wird.

Mit Hilfe der Widerstands-Reihenschaltung wird jedes der beispielsweise acht Segmente der Meßspulenanordnung, die den zu überwachenden Vollkreis von 360° mit drei Bit auflösen, weiter unterteilt, wobei die hier wiedergegebenen vier Widerstände zwei weitere Bit liefern. Die Feinunterteilung zur Erzielung des hochaufgelösten Meßwertes erfolgt dann mit dem Digital/Analog-Wandler, der z.B. nochmals 12 Bit oder mehr liefert, sodaß sich eine Gesamtauflösung von 17 Bit oder höher ergibt.

Ein weiterer Unterschied besteht darin, daß hier der Hilfszähler 65a als Vorwärts/Rückwärts-Zähler ausgebildet ist, der zur Erkennung der momentan erforderlichen Zählrichtung ebenso wie der Hauptzähler 64 das von der Schaltungsanordnung 61 über die Leitung 62 abgegebene Richtungssignal erhält. Durch diese Ausgestaltung des Hilfszählers 65a kann die Schaltungsanordnung 66a als reiner Addierer ausgebildet werden, der keine Subtraktionen ausführen muß.

Die Widerstands-Reihenschaltung 82 dient dazu, das Auflösungsvermögen der gesamten Meßanordnung zu verbessern, ohne den im Digital/Analog-Wandler 38a enthaltenen Spannungsteiler vergrößern zu müssen. Das ist vor allem dann von Vorteil, wenn die Schaltungsanordnung 30' mit Ausnahme der Widerstands-Reihenschaltung 82 als integrierte Schaltung aufgebaut und der Spannungsteiler des Digital/Analodwandlers 38a mit Hilfe von Kondensatoren realisiert ist.

In diesem Fall erzwingt die Steigerung des Auflösungsvermögens durch Vergrößern des Spannungsteilers zwangsläufig auch eine beträchtliche Steigerung der Genauigkeit, weil sonst beispielsweise beim Versuch, den momentanen Spannungsteilerabgriff von einem kleineren auf einen größeren Spannungswert umzuschalten, die Gefahr besteht, daß die abgegriffene Spannung statt größer kleiner wird, was zu einen inakzeptablen Schwingen der Regelschleife führen würde.

Um dies zu verhindern, müßten die Kondensatoren des Spannungsteilers äußerst genau ausgeführt werden, was oberhalb einer kritischen Größe zu beträchtlichen Kostensteigerungen führt, die in vielen Fällen, in den zwar ein hohes Auflösungsvermögen nicht aber eine große absolute Genauigkeit erforderlich ist, nicht annehmbar sind. Bei der Widerstands-Reihenschaltung 82 besteht die eben beschriebene Schwingungsgefahr auch dann nicht, wenn die Widerstände 83 bis 86 („deren Zahl ohne weiteres vergrößert werden kann) nicht exakt gleich groß sind. Beim Umschalten von einem Abgriffspaar auf das benachbarte kann sich dann zwar eine etwas andere Spannungsdifferenz ergeben, die aber hinsichtlich ihrer absoluten Lage immer exakt an die zuvor an den Nachbarabgriffen erfaßte Spannungsdifferenz anschließt, also Stetigkeit aufweist.

Die exteren Zuschaltung der Widerstands-Reihenschaltung 82 zu einer ansonsten integrierten Schaltungsanordnung 30' bietet überdies den Vorteil, daß in Anwendungsfällen mit geringen Genauigkeitsanforderungen kostengünstigere Widerstände 83 bis 86 und bei hohen Genauigkeitsanforderungen, die auch einen höheren Preis rechtfertigen, sehr genau auf gleiche Werte selektierte Widerstände 83 bis 86 verwendet werden können. Die integrierte Schaltung 30' bleibt dabei immer die gleiche.

Die Fig. 5 bis 7 zeigen die jeweilige Meßspulenanordnung in einer zur Drehachse des Drehgebers parallelen Draufsicht, in der von den Kernschalen nur die Außenkontur der Stirnfläche 17 des Zapfens 15, die Stirnfläche 13 der Halbzylinderwand 9 sowie die Stirnfläche 12 der Halbzylinderwand 8 der unteren Kernschale 4 dargestellt sind.

Die Kreise in den Stirnflächen 12, 13 und 17 symbolisieren den durch diese Flächen hindurchtretenden Magnetfluß jeweils in einem Augenblick, in dem der die Stirnflächen 12 und 13 durchsetzende Magnetfluß vom Betrachter weg und der die Stirnfläche 17 des Zapfens 15 durchsetzende Magnetfluß auf den Betrachter zu verläuft.

Die mit durchgezogenen Linien wiedergegebenen Leiter liegen auf der dem Betrachter zugewandten Seite der Trägerplatine 5, während sich die gestrichelt gezeichneten Leiter auf der Unterseite befinden. Punkte, an denen eine Leiterbahn die Platinenseite so wechselt, daß die oben und unten verlaufenden Teile miteinander in elektrisch leitender Verbindung stehen, sind durch eine punktförmige Verdickung gekennzeichnet. Überall dort, wo durchgezogene und gestrichelte Leiterbahnabschnitte in geringem Abstand zueinander parallel wiedergegeben sind, dient dies nur der besseren Darstellung. Tatsächlich verlaufen diese Leiterbahnabschnitte in Blickrichtung deckungsgleich übereinander.

Die Meßspulenanordnung 130 aus Fig. 5 umfaßt einen geschlossenen, äußeren kreisförmigen Leiter 131, der konzentrisch zur Drehachse angeordnet ist, sowie zwei gleich große, deckungsgleich hintereinander liegende, geschlossene innere kreisförmige Leiter 132, 133, die ebenfalls zur Drehachse konzentrisch sind.

Der äußere kreisförmige Leiter 131 ist mit dem inneren kreisförmigen Leiter 132 durch einen radial verlaufenden Leiterabschnitt 134 elektrisch leitend verbunden, dem ein Anschlußleiter 135 um 180° versetzt gegenüberliegt, der mit dem inneren kreisförmigen Leiter 132 elektrisch leitend verbunden ist und von diesem ausgehend in der unteren Leitbahnebene radial nach außen verläuft. Dabei ist er von dem auf der oberen Leitbahnebene befindlichen äußeren kreisförmigen Leiter 131 elektrisch isoliert, der seinerseits mit einem Anschlußleiter 136 in elektrisch leitender Verbindung steht, der in der oberen Leitbahnebene zunächst deckungsgleich mit dem Anschlußleiter 135 radial nach außen verläuft. Diese beiden Anschlußleiter münden in Anschlußkontakte 137, 138.

Die Leiter 131, 132, 134 und 135 umschließen somit zwei Flächenelemente 140, 141 einer ersten Meßspulengruppe, von denen jedes die Form eines Halbkreisringes besitzt und die so angeordnet sind, daß sie sich zu einem Vollkreisring ergänzen, wobei sie durch die von den Leiterabschnitten 134 und 135 gebildeten Trennstege voneinander getrennt sind.

Wie in der genannten EP-A-0 528 199 ausführlich beschrieben, erhält man zwischen den beiden Anschlußleitern 135, 136 ein Ausgangssignal $\Delta U_1$, das für die in Fig. 5 gezeigte Stellung der Stirnfläche 12 den Wert Null und nach einer Drehung dieser Stirnfläche um 90° nach oben bzw. nach unten ein positives bzw. negatives Extremum und nach einer Drehung um 180° wieder den Wert Null aufweist. Zwischen diesen Werten zeigt die Hüllkurve der Wechselspannung $\Delta U_1$ einen dreiecksförmigen Verlauf, der im Bereich der Nulldurchgänge eine sehr gute Linearität besitzt, die jedoch im Bereich der Dreiecksspitzen um so schlechter wird, je mehr sich eine der beiden Endkanten 25, 26 der Stirnfläche 12 an den Trennsteg 134 bzw. den Anschlußleiter 135 annähert. Das Signal $\Delta U_1$ hat die wesentliche Ei-

genschaft, daß aus ihm alle additiven Störgrößen eliminiert sind.

Ein zweites Differenzsignal $\Delta U_2$ wird mit Hilfe einer zweiten Gruppe von Flächenelementen 142, 143 gewonnen, die die gleiche Form wie die Flächenelemente 140, 141 aufweisen und zu diesen in radialer Richtung deckungsgleich liegen, gegen diese in Umfangsrichtung aber um 90° verdreht sind. Die Flächenelemente 142, 143 der zweiten Gruppe werden in radialer Richtung von dem äußeren kreisförmigen Leiter 131 und dem inneren kreisförmigen Leiter 133 begrenzt und sind voneinander durch den Leiterabschnitt 144 und den Anschlußleiter 145 getrennt, die in entsprechender Weise angeordnet und elektrisch leitend verbunden sind, wie dies oben für den Leiterabschnitt 134 und den Anschlußleiter 135 beschrieben wurde. Entsprechendes gilt für den Anschlußleiter 146. Die beiden Anschlußleiter 145, 146 enden in Anschlußkontakten 147, 148, an denen die zweite Differenzspannung $\Delta U_2$ abgegriffen werden kann.

Da die beiden Gruppen von Flächenelementen 140, 141 und 142, 143 einen identischen Aufbau besitzen, gilt für die Spannung $U_2$ das, was oben für $\Delta U_1$ gesagt wurde, in gleicher Weise. Der einzige Unterschied besteht darin, daß $\Delta U_2$ gegen $\Delta U_1$ um einen Drehwinkel von 90° verschoben ist.

Die beiden Differenzsignale $\Delta U_1$ und $\Delta U_2$ können nun mit Hilfe der in den Fig. 3 und 4 gezeigten Schaltungsanordnungen 30, bzw. 30', deren Multiplexer über die Vielfachleitung 32 mit den Anschlußpaaren 137, 138 und 147, 148 in Verbindung steht, in der Weise zur Ermittelung eines Meßwertes M herangezogen werden, daß sie vom Multiplexer 33 zeitlich nacheinander in die einkanalige Signalverarbeitungsstrecke eingespeist werden. Liegt das Differenzsignal $\Delta U_1$ am Eingangsverstärker 36 an, so entspricht das hinter der Diode 40' entstehende Signal dem oben beschriebenen Signal A+off, während beim Anliegen des Differenzsignals $\Delta U_2$ hinter der Diode 42 ein dem obigen Signal -B+off entsprechendes Signal entsteht.

Aus diesen Signalen kann der Meßwert M beispielsweise durch Bildung des Quotienten

$$M = \frac{A + \text{off}}{(A + \text{off}) - (-B + \text{off})}$$

erzeugt werden, was sich in die Regelschleifengleichung

$$A^{\cdot}(M-1) + B^{\cdot}M - \text{off} = 0$$

überführen läßt.

Die oben beschriebenen Faktoren g und f werden hier also unmittelbar vom Meßwert M bzw. dem Wert M-1 gebildet, wodurch sich das Rechenwerk 40 besonders einfach gestaltet. Es muß nämlich dann, wenn das Signal $\Delta U_2$ verarbeitet wird, an den Digital-Analog-Wandler 38 lediglich den Zählerstand des Hauptzählers 41 unverändert anlegen, da dieser Zählerstand das dem Wert M entsprechende Digitalwort bildet. Wenn das Signal $\Delta U_1$ verarbeitet wird legt das Rechenwerk 40 an den Digital/Analog-Wandler 38 das dem Wert M-1 entsprechende Digitalwort an, bei dem alle Stellen, die in dem dem Wert M entsprechenden Digitalwort mit logisch "1" belegt sind, mit logisch "0" belegt werden und umgekehrt. In den Zeiten, in denen der Multiplexer 33 den Eingang des Eingangsverstärkers 36 kurzschließt, legt das Rechenwerk 40 hier ein Digitalwort an den Digital/Analog-Wandler 38, dessen sämtlich Stellen mit einer logisch "1" belegt sind. Dadurch werden in den Speicherkondensatoren 45, 46 und 48 die Signale $(A+\text{off})^{\cdot} (M-1)$, $(-B+\text{off})^{\cdot}M$ und off gespeichert, die durch das Summationsnetzwerk 54 bis 58 summiert werden. Die Regelschleife ändert in der beschriebenen Weise den Zählerstand M des Zählers 41 so lange, bis das vom Summationsnetzwerk 54 bis 58 abgegebene Summensignal gleich 0 ist. Dann ist der Zählerstand M des Zählers 41 der gesuchte Meßwert, der den momentanen Winkel des Drehgebers in digitaler Form wiedergibt.

Allerdings ist der extrem genau lineare Verlauf der Differenzsignale $\Delta U_1$ und $\Delta U_2$ mit dem in Fig. 5 gezeigten Ausführungsbeispiel nur für einen Winkelbereich < 360° erreichbar. Für die Signale $\Delta U_1$ und $\Delta U_2$ ergeben sich nämlich zu den Trennstegen 134, 144 bzw. den Anschlußleitern 135, 145 symmetrisch liegende Winkelbereiche $2\alpha$, in denen zwar ein Signal $\Delta U_1$ bzw. $\Delta U_2$ gewonnen werden kann, dessen Verlauf aber von der Linearität um so mehr abweicht, je näher sich eine der Endkanten 25, 26 an einen der Leiter 134, 144 bzw. 135, 145 annähert. Diese für die Gewinnung eines linearen Meßsignals nicht mehr verwendbaren Winkelbereiche $2\alpha$ müssen um so größer gewählt werden, je höher die Anforderungen an die Linearität sind. Sind diese Anforderungen gering, so kann beispielsweise $\alpha = 15°$ durchaus ausreichend sein, während für hohe Genauigkeiten $\alpha = 30°$ oder sogar $\alpha = 45°$ gewählt werden muß. Somit stehen bei der Anordnung nach Fig. 5 vier voneinander getrennte Meßbereiche von jeweils 90° - $2\alpha$ zur Verfügung, die bei geringen Linearitätsanforderungen jeweils einen Drehwinkel von 60° überdecken. Bei sehr hoher Genauigkeit kann nur noch der Meßbereich verwendet werden, der sich im Uhrzeigersinn von der gestrichelten Linie 149a zur gestrichelten Linie 149b erstreckt, was in vielen Fällen ausreichend ist.

Will man bei hoher Genauigkeit größere Meßwinkel überdecken, so können drei oder vier der in Fig. 5 gezeigten Gruppen von Flächenelemente vorgesehen werden, die dann um jeweils 60° bzw. 45° gegeneinander verdreht angeordnet sind. Es stehen dann drei oder vier Differenzsignale zur Verfügung, von denen zu einem gegebenen Zeitpunkt mit Hilfe des Multiplexers 33 immer jeweils zwei zu der erläuterten Quotientenbildung herangezogen werden. Es sind dies dann jeweils die beiden Differenzsignale der Flächenelementegruppen, von deren Trennstegen bzw. Ausgangsleitern die Endkanten 25, 26 der Durchtrittsfläche zum betrachteten Zeitpunkt die größeren Winkelabstände aufweisen.

Mit drei derartigen Flächenelementgruppen, von denen jede wieder über einen Meßbereich von 120° - 2α ein ausreichend lineares Differenzsignal liefert, läßt sich der Gesamtbereich von 360° überdecken, wenn α nicht größer als 30° sein muß.

Wird eine Linearität gefordert, für die α gleich 45° sein muß, so kann dies mit vier um jeweils 45° gegeneinander versetzten Flächenelementgruppen der beschriebenen Art erreicht werden. Allerdings lassen sich diese Lösungen nicht mehr mit zwei Leitbahnebenen realisieren und es können sich mit der Justiergenauigkeit, mit der die Flächenelemente der verschiedenen Gruppen in radialer Richtung zur Deckung gebracht werden müssen, Probleme ergeben.

Um diese Schwierigkeiten zu vermeiden, kann die in Fig. 6 dargestellte Meßspulenanordnung 150 gewählt werden, die zur Bildung von vier Gruppen von je zwei Flächenelementen, von denen sich jedes über 180° erstreckt, mit zwei Leitbahnebenen auskommt. Zu diesem Zweck umfaßt die Meßspulenanordnung 150 neben einem geschlossenen kreisförmigen äußeren Leiter 131, der hier mehrfach die Leitbahnebene wechselt, und zwei deckungsgleich hintereinander angeordneten geschlossenen kreisförmigen inneren Leitern 132, 133 acht radial verlaufende Leiterabschnitte 151 bis 158, die mit Winkelabständen von jeweils 45° so angeordnet sind, daß sie einander paarweise diametral gegenüberliegen.

Die Leiterabschnitte 151 bis 158 sind alternierend mit dem einen bzw. dem anderen der beiden inneren kreisförmigen Leiter 132 bzw. 133 elektrisch leitend verbunden. An den Punkten, an denen sie den äußeren kreisförmigen Leiter 131 überkreuzen, sind sie von diesem aber elektrisch isoliert. Zu jedem der Leiterabschnitte 151 bis 158 verläuft ein sich zunächst ebenfalls radial erstreckender, mit dem äußeren kreisförmigen Leiter 131 elektrisch leitend verbundener Leiterabschnitt 161 bis 168 in der jeweils anderen Leitbahnebene deckungsgleich nach außen. In einem radialen Abstand, in dem die radialen Streufelder im wesentlichen abgeklungen sind, lösen sich die Leiterabschnitte 161 bis 168 aus dem deckungsgleichen Verlauf mit ihren zugehörigen Leiterabschnitten 151 bis 158 und münden in Anschlußkontaktpaare 170 bis 177, die über die Vielfachleitung 32 (Fig. 3) mit dem Multiplexer 33 in Verbindung stehen.

Der Multiplexer kann hier eine doppelte Aufgabe übernehmen. Er kann einerseits die Anschlüsse eines jeden Anschlußkontaktpaares 170 bis 177 entweder über einen in ihm enthaltenen EIN/AUS-Schalter elektrisch leitend miteinander verbinden oder voneinander trennen und aus der Vielzahl von nicht miteinander verbundenen Anschlußkontaktpaaren die beiden auswählen, an denen die Differenzsignale abgegriffen werden, die in der momentanen Stellung des Drehgebers zur Meßwertbildung heranzuziehen sind. Andererseits kann er diese beiden Differenzsignale so, wie dies oben beschrieben wurde, wieder in die einkanalige Signalverarbeitungsstrecke der in Fig. 3 gezeigten Schaltumgsanordnung 30 einspeisen.

Ein besonderer Vorteil dieser einkanaligen Verarbeitung in Verbindung mit der Meßspulenanordnung 150 aus Fig. 6 liegt darin, daß sie die Einsparung eines der beiden inneren kreisförmigen Leiter 132 oder 133 ermöglicht, da zu jedem Zeitpunkt immer nur ein Differenzsignal benötigt wird und somit auch immer nur eines der Anschlußkontaktpaare durch einen geschlossenen EIN/AUS-Schalter überbrückt werden muß. Mit dem verbleibenden inneren kreisförmigen Leiter 132 oder 133 sind dann alle Leiterabschnitte 151 bis 158 elektrisch leitend verbunden.

Somit kann also jedes Leiterabschnittspaar 151, 161 bis 158, 168 entweder als Anschlußleiter zum Abgreifen eines Differenzsignals oder als Trennsteg dienen, der dann, wenn der zugehörige EIN/AUS-Schalter geschlossen ist, die in Umfangsrichtung unmittelbar an ihn anschließenden Flächenelementsbereiche voneinander trennt, so daß diese zu verschiedenen Flächenelementen derselben Meßspulengruppe gehören. Bei geöffnetem Schalter ist der jeweils zugehörige Leiterabschnitt ohne Trennsteg-Wirkung, so daß an ihn anschließende Flächenelementsbereiche demselben Flächenelement angehören.

Wird der Multiplexer in Verbindung mit einer zweikanaligen Schaltungsanordnung nur zur Steuerung der EIN/AUS-Schalter und Auswahl der zum Abgreifen der Differenzsignale dienenden Anschlußkontaktpaare verwendet, so schließt er im Betrieb immer zwei EIN/AUS-Schalter während er alle anderen öffnet. Welche Schalter geöffnet bzw. geschlossen sind, hängt von der jeweiligen Stellung und Bewegungsrichtung der durch die Stirnfläche 12 definierten Durchtrittsfläche ab.

Nimmt man z.B. an, daß sich die Durchtrittsfläche aus der in Fig. 6 gezeigten Stellung entgegen dem Uhrzeigersinn weiterbewegen soll, so schließt der Multiplexer die zu den Anschlußleiterpaaren 156,166 und 157,167 gehörenden EIN/AUS-Schalter, sodaß die ihnen zugeordneten Trennstege 156, 157 wirksam sind. Da jeder dieser Trennstege mit dem äußeren kreisförmigen Leiter 131 und einem der beiden inneren kreisförmigen Leiter 132 bis 133 in elektrisch leitender Verbindung steht, werden zwei Gruppen von Flächenelementen gebildet, die radial zur Deckung kommen und in Verschieberichtung um 45° gegeneinander versetzt sind.

Die eine Gruppe von Flächenelementen umfaßt die beiden jeweils 180° überdeckenden, d.h. halbkreisringförmigen Flächenelemente, die sich vom Trennsteg 156 zum Anschlußleiterpaar 152, 162 erstrecken, während die andere Gruppe die halbkreisförmigen Flächenelemente umfaßt, die vom Trennsteg 157 bis zum Anschlußleiterpaar 153, 163 verlaufen. An den zugehörigen Anschlußkontaktpaaren 171 bzw. 172 werden die Differenzspannungen $\Delta U_1$ und $\Delta U_2$ für den Bewegungs-

bereich von 45° abgegriffen, in dem sich die Endkante 25 der Stirnfläche 12 aus der gezeigten Stellung bis zu dem in dieser Zeit funktionslosen Leiterabschnitt 155 bewegt, während die gegenüberliegende Endkante 26 bis zu dem in dieser Zeit ebenfalls funnktionslosen Leiterabschnitt 151 läuft.

In der einen Endstellung der eben beschriebenen, sich über 45° erstreckenden Drehbewegung haben die Endkanten 25, 26 von dem jeweils nächstgelegenen "funktionierenden" Trennsteg 156 bzw. 157 einen Winkelabstand von 90° bzw. 45°. Diese Abstände betragen in der anderen Endstellung 90° Dzw. 45°, unterschreiten also niemals den Wert von 45°.

Bewegt sich die Endkante 25 der Stirnfläche 12 weiter entgegen dem Uhrzeigersinn über den "funktionslosen" Leiterabschnitt 155 hinaus, so öffnet der Multiplexer sofort den zum Leiterpaar 156, 166 gehörenden Schalter und schließt den Schalter ,der zum Anschlußleiterpaar 158, 168 gehört. Ersteres ist erforderlich, weil sonst die Endkante 25 den Winkelabstand von 45° zum nächstgelegenen "aktiven" Trennsteg unterschreiten würde; letzteres ist möglich, weil der Winkelabstand der Endkante 26 vom neu eingeschalteten Trennsteg 158 größer als 45° wird. Bei dieser neuen Schalterstellung werden die Differenzsignale an den Anschlußkontaktpaaren 172 und 173 abgegriffen.

Bei einer weitergehenden Drehung können entsprechende Umschaltungen sowohl der "aktiven" Trennstege als auch der zum Abgreifen der Differenzsignale $\Delta U_1$ und $\Delta U_2$ benutzten Anschlußkontaktpaare vorgenommen werden, und es ist möglich, über 360° hinweggehende Drehbewegungen in beiden Richtungen messend zu verfolgen, ohne daß der hier angenommene kritische Randabstandswinkel $\alpha = 45°$ unterschritten wird.

Entsprechendes gilt auch bei Verwendung der im Eingangsteil einkanaligen Schaltungsanordnung 30, nur daß der Multiplexer 33 die Schalter, die gemäß der obigen Beschreibung gleichzeitig geschlossen werden, innerhalb eines Meßzyklus nacheinander schließt.

In beiden Fällen bleibt das Prinzip erhalten, daß zwei Differenz-signale an zwei Gruppen von Meßspulen bzw. deren Flächenelementen abgegriffen werden, wobei die Flächenelemente einer Gruppe sich jeweils zu einem Vollkreisring ergänzen. Sie sind einerseits durch einen radial verlaufenden Trennsteg, der den inneren und den äußeren kreisförmigen Leiter miteinander verbindet, und andererseits durch ein diametral gegenüberliegendes Anschlußleiterpaar voneinander getrennt, an dem die jeweilige Differenz-spannung anliegt. Die beiden so gebildeten Gruppen sind um 45° gegeneinander versetzt und liefern zwei gegeneinander "phasenverschobene" Differenz-signale, die in der oben beschriebenen Weise zur Quotientenbildung verwendet werden.

Der wesentliche Unterschied zu den in Verbindung mit Fig. 5 geschilderten Ausführungsformen liegt darin, daß die Winkelstellung der Flächenelementgruppen nicht unveränderlich festgelegt ist. Vielmehr können sich die Flächenelementgruppen hier durch Öffnen und Schließen der EIN/AUS-Schalter im Multiplexer mit der Durchtrittsfläche "mitbewegen". Diese "Mitbewegung" wird so gesteuert, daß der Winkelabstand zwischen einer der Endkanten 25, 26 und dem nächstgelegenen wirksamen Trennsteg bzw. dem nächstgelegenen wirksamen Anschlußleiter niemals kleiner 45° wird. Man hat somit eine Meßspulenanordnung 150 mit zwei Leitbahnebenen, die den diesem großen Winkel $\alpha$ entsprechenden hohen Linearitäts- und Symmetrieanforderungen bezüglich des Meßsignals genügt.

Bei etwas geringeren Anforderungen genügt es, nur drei schaltbare Trennstege mit Winkelabständen von 60° und drei jeweils diametral gegenüberliegende Anschlußleiterpaare vorzusehen.

Bei einer solchen Anordnung, die ebenfalls nur zwei Leitbahnebenen und eine entsprechend geringere Zahl von Schaltern benötigt, läßt sich dann ein Randabstand $\alpha = 30°$ einhalten.

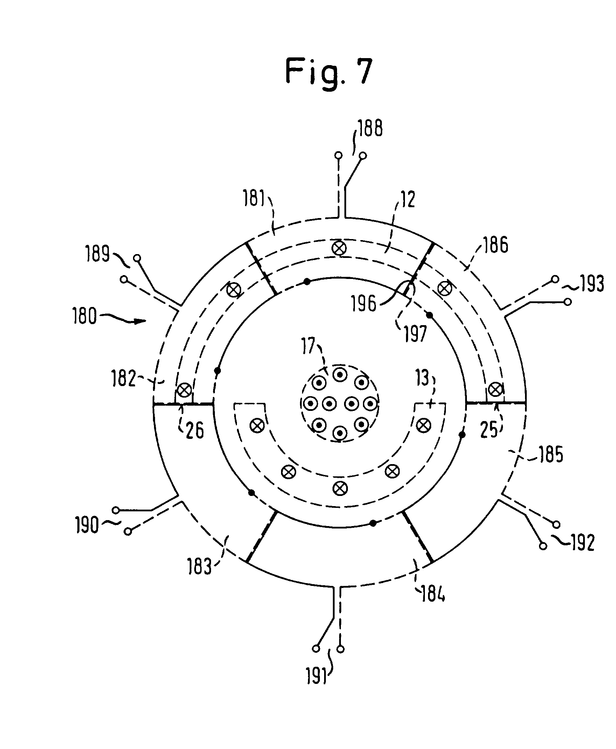

Für viele Anwendungsfälle ist es wünschenswert, einen Drehgeber zur Verfügung zu haben, der den vollen Meßwinkelbereich von 360° mit fünfzehn Bit oder mehr auflöst. Bei herkömmlichen Meßspulensystemen und Auswerteschaltungen führt dies insbesondere dann zu Problemen, wenn die Schaltungsanordnung als integrierte Schaltung ausgebildet werden soll, da integrierte Analog/Digitalwandler um so teurer werden, je größer die von ihnen zu verarbeitende Bit-Zahl ist. Eine unter wirtschaftlichen Gesichtspunkten Kritische Grenze liegt bei zwölf Bit. Hier bietet die Ausführungsform gemäß Fig. 6 in Verbindung mit dem Multiplexer 33 den Vorteil, daß die drei höchstwertigen Bit in die Meßspulenanordnung hinein verlagert werden können, so daß bei einer Gesamtauflösung von 15 Bit der Analog/Digitalwandler nur noch 12 Bit aufzulösen hat. Entsprechendes gilt auch für die Ausführungsform gemäß Fig. 7, wenn sie statt der beschriebenen sechs auf acht Flächenelemente erweitert wird. Sie ist wegen des Vorzeichenwechsels, den bei ihr das eine der beiden Signale A, B erfährt, sogar in der Lage, ein Bit mehr aufzulösen. Da es möglich ist, die Meßspulenanordnungen der Fig. 6 und 7 auch mit sechzehn Flächenelementen auszubilden, kann dann entweder die Bitzahl des Multiplexers auf elf gesenkt oder die Gesamtauflösung auf sechzehn Bit erhöht werden.

In Fig. 7 ist eine Meßspulenanordnung 180 wiedergegeben, die sechs teilkreisringförmige Flächenelemente 181 bis 186 umfaßt, von denen sich jedes über einen Winkel von 60° erstreckt, und die gleiche Innen- und Außenradien besitzen, die etwas kleiner bzw. etwas größer als der Innen- bzw. Außenradius der Stirnfläche 12 gewählt sind, die auch hier die Durchtrittsfläche definiert.

Die Flächenelemente 181 bis 186 sind aneinander anschließend so angeordnet, daß sie sich zu einem Vollkreisring ergänzen, der zur Drehachse konzentrisch liegt. Jedes Flächenelement 181 bis 186 ist von einer eigenen Meßspulenwindung mit einem eigenen Anschlußleiterpaar 188 bis 193 umschlossen. Jede Meßspulenwindung liegt teilweise in der oberen und teilweise in der unteren Leitbahnebene, so daß die gemeinsamen Randbereiche von jeweils zwei in Umfangsrichtung aneinander anschließenden Flächenelementen, beispielsweise der Flächenelemente 181 und 186 von zwei radial verlaufenden Randleitern 196, 197 gebildet werden, die zwar in Fig. 7 nebeneinander gezeichnet sind, in Wirklichkeit aber genau deckungsgleich übereinander liegen. Es sei ausdrücklich darauf hingewiesen, daß dies nicht nur für das exemplarisch herausgegriffene Randleiterpaar 196, 197 sondern in gleicher Weise für alle anderen Randleiterpaare gilt.

Die Anschlußleiterpaare 188 bis 193 können wieder über die Vielfachleitung 32 mit dem Multiplexer 33 aus Fig. 3 verbunden sein.

Auch bei dieser Ausführungsform werden für jede Winkelstellung der Durchtrittsfläche zwei winkelmäßig gegeneinander versetzte Gruppen von Flächenelementen gebildet, deren Randleiter von den Endkanten 25, 26 der Stirnfläche 12 einen Winkelabstand aufweisen, der einen kritischen Winkel $\alpha$ niemals unterschreitet. Bei der dargestellten Variante mit sechs Flächenelementen hat $\alpha$ den Wert von 30°. Mit entsprechend aufgebauten, und angeordneten acht Flächenelementen kann auch hier ein Wert für $\alpha$ von 45° erzielt werden.

Bei der in Fig. 7 gezeigten Ausführungsform umfaßt bei der dargestellten Stellung der Durchtrittsfläche die eine Gruppe einerseits die sich zu einem Halbkreisring ergänzenden Flächenelemente 181, 182 und 183 und andererseits die den komplementären Halbkreisring bildenden Flächenelemente 184, 185 und 186, und die andere Gruppe die sich zu einem Halbkreisring ergänzenden Flächenelemente 182, 183, 184 und die den komplementären Halbkreisring bildenden Flächenelemente 185, 186, 181.

Aus den Ausgangsspannungen der Meßspulen dieser beiden Gruppen kann man die Differenzspannungen

$$\Delta U_1 = U_{181} + U_{182} + U_{183} - (U_{184} + U_{185} + U_{186})$$

und

$$\Delta U_2 = U_{182} + U_{183} + U_{184} - (U_{185} + U_{186} + U_{181})$$

bilden. Zwar befinden sich die Endkanten 25 und 26 der Stirnfläche 12 direkt an den Rändern zwischen den Flächenelementen 185, 186 bzw. 182, 183. Da aber in die obigen Differenzspannungen nur die Summen der Spannungen eingehen, die von den Meßspulenwicklungen dieser Flächenelemente erzeugt werden, bleiben hier auftretende Streufeldeffekte ohne Einfluß. Die bei dieser Betrachtung wirksamen Randbereiche sind die zwischen den Flächenelementen 183, 184 und 186, 181 (erste Gruppe) bzw. zwischen den Flächenelementen 184, 185 und 181, 182 (zweite Gruppe). Von diesen vier Randbereichen haben die Endkanten 25, 26 in der gezeigten Stellung aber mindestens einen Winkelabstand von 60°, so daß sie sich sowohl im Uhrzeigersinn als auch in entgegengesetzter Richtung um 30° verschieben können, ohne den Mindestwinkelabstand $\alpha = 30°$ zu unterschreiten. Es ist also für die oben aufgeführten Kombinationen von Flächenelementen ein Bewegungsbereich von 60° gegeben, in dem die Linearität der beiden Differenzsignale $\Delta U_1$ und $\Delta U_2$ den einem Mindestwinkelabstand $\alpha = 30°$ entsprechenden Anforderungen genügt.

Bildet man nun den Quotienten

$$\frac{\Delta U_1 + \Delta U_2}{\Delta U_1 - \Delta U_2}$$

so erhält man nach Wegfall der identischen Spannungen mit entgegengesetztem Vorzeichen den Ausdruck

$$\frac{2U_{182} + 2U_{183} - 2U_{185} - 2U_{186}}{2U_{181} - 2U_{184}} =$$

$$\frac{(U_{182} - U_{185}) + (U_{183} - U_{186})}{(U_{181} - U_{184})}$$

Diese Spannungsdifferenzen lassen sich mit Hilfe von Schaltern, die im Multiplexer integriert sind, dadurch erzeugen, daß die betreffenden Meßspulen mit entsprechendem Windungssinn miteinander in Reihe geschaltet werden. Es läßt sich zeigen, daß für jede beliebige Stellung der Durchtrittsfläche durch eine mit Hilfe des Multiplexers durchgeführte Permutation dieser drei Spannungsdifferenzen $U_{182} - U_{185}$, $U_{183} - U_{186}$, $U_{181} - U_{184}$ ein das Meßsignal darstellender Quotient der in Zusammenhang mit Fig. 3 entstehenden Form A/B gebildet werden kann, bei dem jeweils zwei andere Spannungsdifferenzen den Zähler und die jeweils dritte Spannungsdifferenz den Nenner bilden.

Durch entsprechende Ansteuerung des Multiplexers läßt sich also auch hier ein "Mitlaufen" der Flächenelementegruppen mit der Durchtrittsfläche simulieren, wie es oben unter Bezugnahme auf Fig. 6 beschrieben wurde. Das Meßsignal hat auch hier die Eigenschaft, daß aus ihm additive Störgrößen wegen der Differenzbildungen eliminiert sind und durch die Quotientenbildung der Einfluß der multiplikativen Störungen beseitigt wird.

Man sieht, daß die den Nenner des in der obigen Gleichung rechts stehenden Quotienten bildende Spannungsdifferenz $U_{181} - U_{184}$ bei einer Verschiebung der Durchtrittsfläche aus der gezeigten Stellung um 30° in der einen oder anderenl Richtung konstant bleibt, während sich $U_{182} - U_{185}$ und $U_{183} - U_{186}$ gegensinnig linear

verändern. Dadurch erhält man wieder ein Meßsignal mit dem gewünschten linearen Verlauf.

Auch hier ist mit Hilfe des Multiplexers eine im Eingangsteil einkanalige oder eine zwei Eingangskanäle aufweisende Schaltungsanordnung zur Gewinnung des Meßsignals verwendbar.

Zwar wurde oben die Verwendung der Erfindung aus Fig. 3 und 4 nur in Verbindung mit induktiven Drehgebern beschrieben. Es sei aber darauf hingewiesen, daß sie in entsprechender Weise auch bei linearen induktiven Stellungsgebern insbesondere in Verbindung mit den für solche Geber in der DE-A-41 27 209 beschriebenen Meßspulenanordnungen zum Einsatz kommen können.

**Patentansprüche**

1. Induktiver Stellungsgeber (1), dessen Meßspulenanordnung (31) mehrere Meßspulen aufweist, die wenigstens zwei Gruppen bilden, von denen jede ein Meßspulensignal liefert, von denen sich wenigstens eines mit der zu überwachenden Stellung ändert, und der eine Schaltungsanordnung (30; 30') nachgeordnet ist, die folgende Bestandteile umfaßt:

   - eine Rechenschaltung (55, 56, 57, 59; 82, 87, 38a, 57a), die wenigstens zwei ihr jeweils gleichzeitig zugeführte Signale, die den Informationsgehalt der Meßspulensignale tragen, zur Erzeugung eines Meßsignals gemäß einem vorbestimmten Algorithmus miteinander verknüpft,
   - einen Multiplexer (33; 33), der so steuerbar ist, daß er einerseits von der Meßspulenanordnung (31) wenigstens zwei für eine örtliche Grobauflösung ausgewählte Meßspulensignale abgreift und andererseits diese Meßspulensignale zeitlich nacheinander in
   - eine einkanalige Signalverarbeitungsstrecke (36, 38, 39; 36, 39) mit einem Eingangsverstärker (36) einspeist, wodurch am Ausgang der einkanaligen Signalverarbeitungsstrecke (36, 38, 39; 36, 39) zeitlich nacheinander erste und zweite Ausgangssignale erscheinen, die von der Rechenschaltung (55, 56, 57, 59; 82, 87, 38a, 57a) paarweise zur Bildung jeweils eines Meßwertes verarbeitet werden,
   - einen Demultiplexer (41, 43; 41, 43), der die ersten Ausgangssignale der einkanaligen Signalverarbeitungsstrecke (36, 38, 39; 36, 39) dem einen und die zweiten Ausgangssignale der einkanaligen Signalverarbeitungsstrecke (36, 38, 39; 36, 39) dem anderen von
   - zwei Signalkanälen (45, 52, 46, 53; 45, 80, 46, 81) zuführt, die mit dem einen bzw. dem anderen von wenigstens zwei Eingängen der Rechenschaltung (55, 56, 57, 59; 82, 87, 38a, 57a) verbunden sind, wobei der eine der beiden Signalkanäle (45, 52, 46, 53; 45, 80, 46, 81) das ihm zugeführte Signal zumindest in einem Zeitpunkt an den zugehörigen Eingang der Rechenschaltung (55, 56, 57, 59; 82, 87, 38a, 57a) anlegt, in dem auch der andere Signalkanal (46, 53, 45, 52; 46, 81, 45, 80) das ihm zugeführte Signal (55, 56, 57, 59; 82, 87, 38a, 57a) anlegt, die aus diesen beiden Signalen einen den Grobmeßwert auflösenden Feinmeßwert bildet.

2. Induktiver Stellungsgeber nach Anspruch 1, dadurch **gekennzeichnet,** daß die Meßspulenanordnung mehr als zwei Meßspulengruppen umfaßt, deren Meßspulen jeweils ein Flächenelement umschließen, das von einem Magnetfluß durchsetzt wird, der sich mit der zu überwachenden Stellung ändern kann, wobei die Flächenelemente aneinander anschließen und den gesamten Bewegungsbereich des Stellungsgebers überdecken.

3. Induktiver Stellungsgeber nach Anspruch 2, dadurch **gekennzeichnet,** daß jeweils zu einer Meßspulengruppe gehörende Flächenelemente unmittelbar aneinander anschließen und den gesamten Bewegungsbereich des Stellungsgebers überdecken, daß zu verschiedenen Meßspulengruppen gehörende Flächenelemente in Bewegungsrichtung so gegeneinander versetzt sind, daß sie sich zumindest teilweise überlappen, und daß Meßspulen, die verschiedene Flächenelemente umschließen, gemeinsame Leiterabschnitte aufweisen.

4. Induktiver Stellungsgeber nach Anspruch 2, dadurch **gekennzeichnet,** daß jeweils zu einer Meßspulengruppe gehörende Flächenelemente mit Flächenelementen, die zu anderen Meßspulengruppen gehören, alternierend angeordnet sind, und daß jedes Flächenelement von einer eigenen Meßspule umschlossen ist, die mit den Meßspulen anderer Flächenelemente keine gemeinsamen Leitbahnabschnitte aufweist.

5. Induktiver Stellungsgeber nach einem der Ansprüche 2 bis 4, dadurch **gekennzeichnet,** daß die Meßspulenanordnung so ausgebildet ist, daß die Lage der jeweils aktiven Flächenelemente mit Hilfe von steuerbaren Schaltern veränderbar ist, die in den Multiplexer (33) integriert sind.

6. Induktiver Stellungsgeber nach einem der vorhergehenden Ansprüche, dadurch **gekennzeichnet**, daß in der Rechenschaltung jeweils zwei Signale, die von Meßspulensignalen mit unterschiedlichem Verlauf abgeleitet sind, mit Faktoren (f, g) gewichtet und die so erhaltenen gewichteten Signale (A·f, B·g) summiert werden, wobei die Faktoren mit Hilfe eines Steuersignals so lange verändert werden, bis das Summensignal der gewichteten Signale gleich einem vorgegebenen Wert wird, und daß das diesen vorgegebenen Wert erzeugende Steuersignal als Meßsignal dient.

7. Induktiver Stellungsgeber nach Anspruch 6, dadurch **gekennzeichnet,** daß die Gewichtung mit Hilfe einer multiplizierenden Digital/Analog-Wandleranordnung (38; 38a) erfolgt, deren digitale Einqangswortfolge, die das Steuersignal bildet, von einem Zähler (64) geliefert wird, der fortlaufend die Ausgangsimpulse eines spannungsgesteuerten Oszillators (61) zählt, dessen Steuereingang das Summensignal der gewichteten Signale zugeführt wird, wobei durch das Vorzeichen des Summensignals festgelegt ist, ob der Zähler (64) aufwärts oder abwärts zählt.

8. Induktiver Stellungsgeber nach einem der vorhergehenden Ansprüche, dadurch **gekennzeichnet**, daß wenigstens einer der Signalkanäle eine Signalspeicherschaltung (45, 46) umfaßt, in der das eine Ausgangssignal der einkanaligen Signalverarbeitungsstrecke gespeichert wird, während die einkanalige Signalverarbeitungsstrecke ein anderes Eingangssignal verarbeitet.

9. Induktiver Stellungsgeber nach Anspruch 8, dadurch **gekennzeichnet,** daß in jedem der beiden Signalkanäle eine Speicherschaltung (45, 46) vorhanden ist.

10. Induktiver Stellungsgeber nach einem der Ansprüche 6 bis 9, dadurch **gekennzeichnet**, daß der Multiplexer (33) zur Kompensation der Eingangs-Offset-Spannung (off) des Eingangsverstärkers (36) dessen Eingang für wählbare Zeitabschnitte kurzschließt, und daß ein vom Eingangsverstärker (36) in diesen Zeitabschnitten abgegebenes Signal bei der Bildung des Meßsignals als Korrekturwert berücksichtigt wird.

11. Induktiver Stellungsgeber nach Anspruch 10, dadurch **gekennzeichnet,** daß eine Signalspeicherschaltung (48) vorgesehen ist, in der ein die Eingangs-Offset-Spannung des Eingangsverstärkers (36) wiedergebendes Signal zwischengespeichert werden kann.

12. Induktiver Stellungsgeber nach einem der Ansprüche 7 bis 11, dadurch **gekennzeichnet**, daß ein zweiter Zähler (65; 65a) vorgesehen ist, der jeweils ausgehend vom Zählwert Null die Ausgangsimpulse des spannungsgesteuerten Oszillators (61) für jeweils einen Meßzyklus zählt, und daß zur Gewinnung des Meßergebnisses das Zählergebnis des zweiten Zählers (65) in Abhängigkeit vom Vorzeichen des Summensignals zum Zählergebnis des ersten Zählers (64) addiert oder von diesem subtrahiert wird.

13. Induktiver Stellungsgeber nach einem der vorhergehenden Ansprüche, dadurch **gekennzeichnet,** daß die Meßspulensignale Differenzsignale sind.

14. Induktiver Stellungsgeber nach einem der Ansprüche 8 bis 13, dadurch **gekennzeichnet,** daß die wenigstens eine Speicherschaltung von einem Kondensator (45, 46) gebildet wird, dem das abgeleitete Signal über einen steuerbaren Schalter (43, 41) zuführbar ist.

15. Induktiver Stellungsgeber nach Anspruch 14, dadurch **gekennzeichnet,** daß das abgeleitete Signal ein Wechselspannungssignal ist und daß der steuerbare Schalter (43, 41) zu einem Zeitpunkt geschlossen wird, der in einem Bereich liegt, in dem das abgeleitete Signal einen geringen Spannungsgradienten dU/dt aufweist, und daß der steuerbare Schalter (43, 41) in diesem Bereich auch wieder geöffnet wird.

16. Induktiver Stellungsgeber nach Anspruch 15, dadurch **gekennzeichnet,** daß das Schließen und Öff-nen des steuerbaren Schalters (43, 41) im Bereich des Scheitelpunktes einer sinusförmigen Spannung erfolgt.

17. Induktiver Stellungsgeber nach Anspruch 15 oder 16, dadurch **gekennzeichnet,** daß das Schließen und Öffnen des steuerbaren Schalters (43, 41) durch eine Ablaufsteuerung (34) erfolgt, die die Schaltzeitpunkte dadurch ermittelt, daß sie das Wechselspannungssignal auswertet, das der Erregerspule des induktiven Stellungsgebers zugeführt wird.

18. Induktiver Stellungsgeber nach einem der Ansprüche 15 bis 17, dadurch **gekennzeichnet**, daß immer dann, wenn einer der steuerbaren Schalter (43, 41) geöffnet wird, einzelne Teile (61, 64, 65, 65a, 66, 66a, 40) der Schaltungsanordnung (30), die möglicherweise Quellen von Störspannungsspitzen bilden können, für einen kurzen Zeitraum stillgesetzt werden, der vor dem Schaltzeitpunkt für den jeweiligen steuerbaren Schalter (43, 41) beginnt und nach diesem Schaltzeitpunkt endet.

19. Induktiver Stellungsgeber nach einem Ansprüche 7 bis 18, dadurch **gekennzeichnet**, daß die multiplizierende Digital/Analog-Wandlerschaltung (38) in der einkanaligen Signalverarbeitungsstrecke (36, 38, 39, 41, 42) angeordnet ist und an ihrem einen Analogspannungseingang das Wechselspannungsausgangssignal des Eingangsverstärkers (36) erhält, während ihr zweiter Analogspannungseingang auf die Systemmasse gelegt ist.

20. Induktiver Stellungsgeber nach einem Ansprüche 8 bis 18, dadurch **gekennzeichnet**, daß die einkanalige Signalverarbeitungsstrecke (36, 39) im wesentlichen aus dem Eingangsverstärker (36) und einem Differenzverstärker (39) zur Ansteuerung der wenigstens einen Signalspeicherschaltung (45, 46) besteht.

21. Induktiver Stellungsgeber nach den Ansprüchen 9 und 20, dadurch **gekennzeichnet**, daß die Ausgangssignale der beiden Speicherschaltungen (45, 46) an die Enden einer Widerstands-Reihenschaltung (82) angelegt sind, daß ein weiterer Multiplexer (87) vorhanden ist, mit dessen Hilfe die an jedem der Widerstände (83, 84, 85, 86) der Widerstands-Reihenschaltung (82) abfallenden Spannungen einzeln an die beiden Analogspannungseingänge der multiplizierenden Digital/Analog-Wandlerschaltung (38a) anlegbar sind.

22. Induktiver Stellungsgeber nach Anspruch 21, dadurch **gekennzeichnet,** daß die Schaltungsanordnung (30') als integrierte, die Widerstands-Reihenschaltung (82) nicht umfassende Schaltung ausgebildet und über gesonderte Anschlüsse mit der extern angeordneten Widerstands-Reihenschaltung (82) verbindbar ist.

23. Induktiver Stellungsgeber nach Anspruch 22, dadurch **gekennzeichnet**, daß der in der multiplizierenden Digital/Analog-Wandlerschaltung (38a) enthaltene Spannungsteiler mit Hilfe von Kondensatoren realisiert ist.

**Claims**

1. An inductive position sensor (1) whose measurement coil arrangement (31) has a plurality of measurement coils which form at least two groups, each of which supplies a measurement coil signal of which at least one changes with the position to be monitored, and downstream of which is disposed a circuit arrangement (30; 30') which includes the following components:

   - a computing circuit (55, 56, 57, 59; 82, 87, 38a, 57a) which interlinks at least two signals which are respectively simultaneously supplied thereto and which carry the information content of the measurement coil signals to produce a measurement signal in accordance with a predetermined algorithm,

   - a multiplexer (33; 33) which is so controllable that on the one hand it takes off from the measurement coil arrangement (31) at least two measurement coil signals which are selected for local coarse resolution and on the other hand feeds said measurement coil signals in time succession into

   - a single-channel signal processing section (36, 38, 39; 36, 39) having an input amplifier, whereby first and second output signals appear in time succession at the output of the single-channel signal processing section (36, 38, 39; 36, 39), said first and second output signals being processed by the computing circuit (55, 56, 57, 59; 82, 87, 38a, 57a) in pairs to form a respective measurement value,

   - a demultiplexer (41, 43; 41, 43) which feeds the first output signals of the single-channel signal processing section (36, 38, 39; 36, 39) to the one and the second output signals of the single-channel signal processing section (36, 38, 39; 36, 39) to the other of

   - two signal channels (45, 52, 46, 53; 45, 80, 46, 81) which are connected to one and the other respectively of at least two inputs of the computing circuit (55, 56, 57, 59; 82, 87, 38a, 57a), wherein the one of the two signal channels (45, 52, 46, 53; 45, 80, 46, 81) applies the signal supplied thereto to the associated input of the computing circuit (55, 56, 57, 59; 82, 87, 38a, 57a) at least at a moment in time at which also the other signal channel (46, 53, 45, 52; 46, 81, 45, 80) applies the signal supplied thereto to the associated input of the computing circuit (55, 56, 57, 59; 82, 87, 38a, 57a) which forms from those two signals a fine measurement value which resolves the coarse measurement value.

2. An inductive position sensor according to claim 1 characterised in that the measurement coil arrangement comprises more than two groups of measurement coils, the measurement coils of which each embrace a respective surface element through which passes a magnetic flux which can vary with the position to be monitored, the surface elements adjoining each other and covering the entire range of movement of the position sensor.

3. An inductive position sensor according to claim 2 characterised in that surface elements which respectively belong to a measurement coil group immediately adjoin each other and cover the entire range of movement of the position sensor, surface elements which belong to different measurement coil groups are displaced relative to each other in the direction of movement in such a way that they at least partially mutually overlap, and measurement coils which embrace different surface elements have common conductor portions.

4. An inductive position sensor according to claim 2 characterised in that surface elements which respectively belong to a measurement coil group are arranged alternately with surface elements which belong to other measurement coil groups and each surface element is embraced by its own measurement coil which does not have common conductor track portions with the measurement coils of other surface elements.

5. An inductive position sensor according to one of claims 2 to 4 characterised in that the measurement coil arrangement is such that the position of the respectively active surface elements is variable by means of controllable switches which are integrated in the multiplexer (33).

6. An inductive position sensor according to one of the preceding claims characterised in that in the computing circuit each two signals which are derived from measurement coil signals of different configurations are weighted with factors(f, g) and weighted signals (A·f, B·g) produced in that way are summed, wherein the factors are varied by means of a control signal until the sum signal of the weighted signals is equal to a predetermined value, and the control signal which produces said predetermined value serves as the measurement signal.

7. An inductive position sensor according to claim 6 characterised in that the weighting action is effected by a multiplying digital-analog converter arrangement (38; 38a) whose digital input word sequence which forms the control signal is supplied by a counter (64) which continuously counts the output pulses of a voltage-controlled oscillator (61) whose control input receives the sum signal of the weighted signals, wherein the sign of the sum signal establishes whether the counter (64) counts up or down.

8. An inductive position sensor according to any one of the preceding claims characterised in that at least one of the signal channels includes a signal storage circuit (45, 46) to store the one output signal of the single-channel signal processing section while the single-channel signal processing section is processing another input signal.

9. An inductive position sensor according to claim 8 characterised in that a said storage circuit (45, 46) is provided in each of the two signal channels.

10. An inductive position sensor according to any one of claims 6 to 9 characterised in that the multiplexer (33) short-circuits the input of the input amplifier (36) for selectable periods of time to compensate for the input offset voltage (off) of the input amplifier, and that a signal produced by the input amplifier (36) in said periods of time is taken into consideration when forming the measurement signal as a correction value.

11. An inductive position sensor according to claim 10 characterised in that there is provided a signal storage circuit (48) for intermediate storage of a signal reproducing the input offset voltage of the input amplifier (36).

12. An inductive position sensor according to any one of claims 7 to 11 characterised in that there is provided a second counter (65; 65a) which starting from a count value of zero counts the output pulses of the voltage-controlled oscillator (61) for a respective measurement cycle, and that the count result of the second counter (65) is added to or subtracted from the count result of the first counter (64) in dependence on the sign of the sum signal, to produce the measurement result.

13. An inductive position sensor according to any one of the preceding claims characterised in that the measurement coil signals are difference signals.

14. An inductive position sensor according to any one of claims 8 to 13 characterised in that the at least one storage circuit is formed by a capacitor (45, 46) to which the derived signal can be fed by way of a controllable switch (43, 41).

15. An inductive position sensor according to claim 14 characterised in that the derived signal is an ac voltage signal and that the controllable switch (43, 41) is closed at a moment in time in a range in which the derived signal has a low voltage gradient dU/dt, and that the controllable switch (43, 41) is also opened again in that range.

16. An inductive position sensor according to claim 15 characterised in that closing and opening of the controllable switch (43, 41) is effected in the region of the peak of a sinusoidal voltage.

17. An inductive position sensor according to claim 15 or claim 16 characterised in that opening and closing of the controllable switch (43, 41) is effected by a system control (34) determining the switching times by evaluating the ac voltage signal which is fed to the exciter coil of the inductive position sensor.

18. An inductive position sensor according to one of claims 15 to 17 characterised in that whenever one of the controllable switches (43, 41) is opened individual portions (61, 64, 65, 65a, 66, 66a, 40) of the circuit arrangement (30) which can possibly form sources of interference voltage peaks are stopped for a short period of time which begins prior to the switching time for the respective controllable switch (43, 41) and terminates after said switching time.

19. An inductive position sensor according to one of claims 7 to 18 characterised in that the multiplying digital-analog converter circuit (38) is disposed in the single-channel signal processing section (36, 38, 39, 41) and receives at its one analog voltage input the ac voltage output signal of the input amplifier (36) while its second analog voltage input is connected to system ground.

20. An inductive position sensor according to one of claims 8 to 18 characterised in that the single-channel signal processing section (36, 39) substantially comprises the input amplifier (36) and a differential amplifier (39) for actuating the at least one signal storage circuit (45, 46).

21. An inductive position sensor according to claims 9 and 20 characterised in that the output signals of the two storage circuits (45, 46) are applied to the ends of a resistor series circuit (82), that there is a further multiplexer (87) by means of which the voltage dropped at each of the resistors (83, 84, 85, 86) of the resistor series circuit (82) is individually applied to the two analog voltage inputs of the multiplying digital-analog converter circuit (38a).

22. An inductive position sensor according to claim 21 characterised in that the circuit arrangement (30') is in the form of an integrated circuit not including the resistor series circuit (82) and can be connected to the externally arranged resistor series circuit (82) by way of separate connections.

23. An inductive position sensor according to claim 22 characterised in that the voltage divider included in the multiplying digital-analog converter circuit (38a) is produced by means of capacitors.

## Revendications

1. Transducteur de position inductif (1), dont l'arrangement de bobines de mesure (31) comprend plusieurs bobines de mesure, qui forment au moins deux groupes dont chacun délivre un signal de bobines de mesure, dont au moins un varie avec la position à surveiller, et un arrangement de circuit (30, 30') est dispcsé derrière l'arrangement de bobines de mesure et comprend les pièces constitutives suivantes :

- un circuit de calcul (55, 56, 57, 59 ; 82, 87, 38a, 57a), qui combine ensemble au moins deux signaux qui lui sont respectivement simultanément amenés, qui portent le contenu de l'information des signaux de bobines de mesure pour l'obtention d'un signal de mesure selon un algoritme prédéterminé,

- un multiplexeur (33 ; 33), qui peut être commandé de telle sorte qu'il mesure d'une part à partir de l'arrangement de bobines de mesure (31) au moins deux signaux de bobines de mesure choisis pour une résolution grossière locale et d'autre part traite consécutivement des signaux de bobines de mesure de la manière suivante :

    il les alimente dans un parcours de traitement de signal à un canal (36, 38, 39 ; 36, 39) ayant un amplificateur d'encrée (36), d'où il apparait à la sortie du parcours de traitement de signal à un canal (36, 38, 39 ; 36, 39), consécutivement un premier et un second signal de sortie, qui sont traités par paire par le circuit de calcul (55, 56, 57, 59 ; 82, 87, 38a, 57a) pour former respectivement une valeur de mesure,
    il les alimente dans un démultiplexeur (41, 43 ; 41, 43), qui conduit les premiers signaux de sortie du parcours de traitement de signal à un canal (36, 38, 39 ; 36, 39) à l'un et les deuxièmes signaux de sortie du parcours de traitement de signal à un canal (36, 38, 39 ; 36, 39) à l'autre de deux canaux de signaux (45, 52, 46, 53 ; 45, 80, 46, 81), qui sont reliés avec l'un respectivement avec l'autre d'au moins deux entrées du circuit de calcul (55, 56, 57, 59 ; 82, 87, 38a, 57a), l'un des deux canaux de signaux (45, 52, 46, 53 ; 45, 80, 46, 81) appliquant le signal qui lui est amené à l'entrée correspondante du circuit de calcul (55, 56, 57, 59 ; 82, 87, 38a, 57a), au moins à un moment où l'autre canal de signal (46, 53, 45, 52 ; 46, 81, 45, 81) applique également le signal qui lui est amené à l'entrée correspondante du circuit de calcul (55, 56, 57, 59 ; 82, 87, 38a, 57a), qui forme à partir de ces deux signaux une valeur de mesure fine résolvant la valeur de mesure grossière.

2. Transducteur de position inductif selon la revendication 1, caractérisé en ce que l'arrangement de bobines de mesure comprend plus de groupes de bobines de mesure dont les bobines de mesure entourent respectivement un élément de surface, qui est traversé par un flux magnetique, qui peut varier avec la position à surveiller, les éléments de surface se raccordant les uns aux autres et recouvrant la totalité du domaine de déplacement du transducteur de position.

3. Transducteur de position inductif selon la revendication 2, caractérisé en ce que des éléments de surface associés respectivement à un groupe de bobines de mesure se raccordent directement les uns aux autres et recouvrent la totalité du domaine de déplacement du transducteur de position, en ce que des éléments de surface associés pour des groupes de bobines de mesure différents à des groupes de bobines de mesure différents sont décalés les uns par rapport aux autres dans la direction de déplacement de telle sorte qu'ils se chevauchent au moins partiellement, et que des bobines de mesure, qui entourent des éléments de surface différents présentent des sections de conducteurs communs.

4. Transducteur de position inductif selon la revendication 2, caractérisé en ce que des éléments de surface associés respectivement à un groupe de bobines de mesure sont disposés de manière alternée avec des éléments de surface associés à d'autres groupes de bobines de mesure, et en ce que chaque élément de surface est entouré par une bobine de mesure particulière, qui ne présente avec les bobines de mesure d'autres éléments de surface aucune section de piste conductrice commune.

5. Transducteur de position inductif selon l'une des revendications 2 à 4, caractérisé en ce que l'arrangement de bobines de mesure est réalisé de telle sorte que la position des éléments de surface respectivement actifs peut être modifiée à l'aide de commutateurs commandables, qui sont intégrés dans le multiplexeur (33).

6. Transducteur de position inductif selon l'une des revendications précédentes, caractérisé en ce que dans le circuit de calcul respectivement deux signaux, qui sont mesurés à partir de signaux de bobines de mesure avec un parcours différent, sont pondérés avec des facteurs (f, g) et les signaux pondérés ainsi obtenus (A·f, B·g) sont additionnés, les facteurs étant modifiés à l'aide d'un signal de commande, jusqu'à ce que le signal de somme des signaux pondérés soit égal à une valeur prédéterminée, et en ce que le signal de commande créant cette valeur prédéterminée sert en tant que signal de mesure.

7. Transducteur de position inductif selon la revendication 6, caractérisé en ce que la pondération est obtenue à l'aide d'un arrangement de convertisseur numérique/analogique multiplicateur (38 ; 38a), dont la séquence de mot d'entrée numérique qui forme le signal de commande, est délivré par un compteur (64) qui compte en continu les impulsions de sortie d'un oscillateur commandé en tension (61), à l'entrée de commande duquel est alimenté le signal de somme des signaux pondérés, d'où il est déterminé par le signe de signal de somme si le compteur (64) compte de manière croissante ou décroissante.

8. Transducteur de position inductif selon l'une quelconque des revendications précédentes, caractérisé en ce qu'au moins un des canaux de signaux comprend un circuit de mémoire de signal (45, 46), dans lequel un des signaux de sortie du parcours de traitement de signal à un canal est stocké, pendant que le parcours de traitement de signal à un canal traite un autre signal d'entrée.

9. Transducteur de position inductif selon la revendication 8, caractérisé en ce que dans chacun des deux canaux de signaux est prévu un circuit de mémoire (45, 46).

10. Transducteur de position inductif selon l'une des revendications 6 à 9, caractérisé en ce que le multiplexeur (33), pour une compensation de la tension offset d'entrée (off) de l'amplificateur d'entrée (36), court-circuite son entrée pour des périodes de temps sélectionnables, et en ce qu'un signal prélevé à partir de l'amplificateur d'entrée (36) dans ces périodes est considéré lors de la formation du signal de mesur en tant que valeur de correction.

11. Transducteur de position inductif selon la revendication 10, caractérisé en ce qu'un circuit de mémoire de signal (48) est prévu, dans lequel un signal reproduisant la tension offset d'entrée de l'amplificateur d'entrée (36) peut être stocké temporairement.

12. Transducteur de position inductif selon l'une des revendications 7 à 11, caractérisé en ce qu'un deuxième compteur (65, 65a), est prévu, qui compte respectivement à partir de la valeur de comptage zéro les impulsions de sortie de l'oscillateur commandé en tension (61) pour respectivement un cycle de mesure, et en ce que pour l'obtention du résultat de mesure, le résultat de comptage du deuxième compteur (65), en fonction du signe du signal de somme, est ajouté ou soustrait du résultat de mesure du premier compteur (64).

13. Transducteur de position inductif selon l'une quelconque des revendications précédentes, caractérisé en ce que les signaux de bobines de mesure sont des signaux de différence.

14. Transducteur de position inductif selon l'une des revendications 8 à 13, caractérisé en ce que ledit au moins un circuit de mémoire est formé par un condensateur (45, 46), auquel on peut amener le signal mesuré par l'intermédiaire d'un commutateur commandable (43, 41).

15. Transducteur de position inductif selon la revendication 14, caractérisé en ce que le signal mesuré est un signal de tension alternative et en ce que le commutateur commandable (43, 41) est fermé à un moment qui est situé dans un domaine dans lequel le signal mesuré présente un faible gradient de tension dU/dt, en en ce que le commutateur commandable (43, 41) est également à nouveau ouvert dans ce domaine.

16. Transducteur de position inductif selon la revendication 15, caractérisé en ce que la fermeture et l'ouverture du commutateur commandable (43, 41) se produisent dans le domaine du sommet d'une tension sinusoïdale.

17. Transducteur de position inductif selon la revendication 15 ou 16, caractérisé en ce que la fermeture et l'ouverture du commutateur commandable (43, 41) se réalisent par l'intermédiaire d'une commence séquentielle (34), qui détermine les moments de commutation en ce qu'elle analyse le signal de tension alternative, qui est conduit à la bobine d'excitation du transducteur de position inductif.

18. Transducteur de position inductif selon l'une des revendications 15 à 17, caractérisé en ce qu'à chaque fois qu'un des commutateurs commandables (43, 41) est ouvert, des parties individuelles (61, 64, 65, 65a, 66, 66a, 40) de l'arrangement de circuit (30), qui peuvent potentiellement formés des sources de pointe de tension parasite, sont mis hors service pendant une courte période de temps, qui commence avant le moment de commutation pour le commutateur commandable respectif (43, 41) et termine après ce moment de commutation.

19. Transducteur de position inductif selon l'une des revendications 7 à 18, caractérisé en ce que le circuit convertisseur numérique/analogique multiplicateur (38) est disposé dans le parcours de traitement de signal à un canal (36, 38, 39, 41, 42) et reçoit à une de ses entrées de tension analogique le signal de sortie de tension alternative de l'amplificateur d'entrée (36), alors que la deuxième entrée de tension analogique est reliée à la masse du système.

20. Transducteur de position inductif selon l'une des revendications 8 à 18, caractérisé en ce que le parcours de traitement de signal à un canal (36, 39) est essentiellement constitué de l'amplificateur d'entrée (36) et d'un amplificateur différentiel (39) pour la commande dudit au moins un circuit de mémoire de signal (45, 46).

21. Transducteur de position inductif selon les revendications 9 et 20, caractérisé en ce que les signaux de sortie des deux circuits de mémoire (45, 46) sont appliqués aux extrémités d'un circuit de résistance en série (82), en ce qu'un autre multiplexeur (87) est prévu, à l'aide duquel les tensions chutant au niveau de chacune des résistances (83, 84, 85, 86) du circuit de résistance en série (82) peuvent être appliquées individuellement aux deux entrées de tension analogique du circuit convertisseur numérique/analogique multiplicateur (38a).

22. Transducteur de position inductif selon la revendication 21, caractérisé en ce que l'arrangement de circuit (30') est réalisé sous la forme d'un circuit intégré n'incluant pas le circuit de résistance en série (82) et peut être relié par des raccordements séparés avec le circuit de résistance en série externe (82).

23. Transducteur de position inductif selon la revendication 22, caractérisé en ce que le diviseur de tension contenu dans le circuit convertisseur numérique/analogique multiplicateur (38a) est réalisé à l'aide de condensateurs.

Fig. 1

Fig. 2

Fig. 3

Fig. 4

SENSOR — MUX — 36 — 39 — 47 — 43 — 41 — 80 — 83 — 84 — 82 — 85 — 86 — MUX — 88 — 89 — m ANALOG/DIGITAL-MULTIPLIZ. 1-m — S/H

31 — 33 — 30' — 51 — 49 — 50 — 46 — 45 — 48 — 81 — 87 — 38a — 57a — 60

37 — OSZILLATOR — ABLAUFSTEUERUNG — HAUPTZÄHLER — VCO

35 — 34 — ADD. — HILFSZÄHLER — 64 — 62 — 63 — 61

66a — 65a

MESSWERT  GESCHWINDIGKEIT

EP 0 582 111 B1

24

Fig. 5

Fig. 6

# Fig. 7